# EUROPEAN PATENT SPECIFICATION

(11) **EP 4 191 312 B1**
(45) Date of publication and mention of the grant of the patent: **02.12.2026**
(21) Application number: 22194408.5
(22) Date of filing: 07.09.2022
(51) Int. Cl.: G02B 7/04, G02B 27/64, G02B 13/00

(54) **PHOTOGRAPHING MODULE AND ELECTRONIC DEVICE**
FOTOGRAFIERMODUL UND ELEKTRONISCHE VORRICHTUNG
MODULE DE PHOTOGRAPHIE ET DISPOSITIF ÉLECTRONIQUE

(30) Priority: 02.12.2021 US 202163285382 P
(43) Date of publication of application: 07.06.2023
(73) Proprietor: Largan Precision Co. Ltd., Taichung City (TW)
(72) Inventor: Fan, Chen Wei, Taichung City (TW); CHOU, Ming-Ta, Taichung City, (TW); TSENG, Te-Sheng, Taichung City (TW); HUANG, Chen-Yi, Taichung City, (TW)
(74) Representative: dompatent

(56) References cited:
- EP-A1- 3 779 550
- WO-A1-2021/025518
- WO-A1-2021/108972
- WO-A1-2021/218530
- CN-A- 111 596 435
- CN-A- 112 312 000
- CN-A- 113 542 579
- CN-U- 212 391 698
- US-A1- 2015 042 870
- US-A1- 2018 176 472
- US-A1- 2020 137 274
- US-A1- 2020 412 958
- US-A1- 2022 019 052
- US-A1- 2022 082 786

## Description

### BACKGROUND

### Technical Field

The present disclosure relates to a photographing module and an electronic device, more particularly to a photographing module applicable to an electronic device.

### Description of Related Art

With the development of semiconductor manufacturing technology, the performance of image sensors has been improved, and the pixel size thereof has been scaled down. Therefore, featuring high image quality becomes one of the indispensable features of an optical system nowadays. Furthermore, due to the rapid changes in technology, electronic devices equipped with optical systems are trending towards multi-functionality for various applications, and therefore the functionality requirements for the optical systems have been increasing.

In recent years, there is an increasing demand for electronic devices featuring compact size, but conventional optical systems, especially the telephoto optical systems with a long focal length, are difficult to meet both the requirements of high image quality and compactness. Conventional telephoto optical systems usually have shortcomings of overly long total length, poor image quality or overly large size, which is unable to meet the requirements of the current technology trends. To achieve compactness, the optical systems may be configured to have a folded optical axis so as to reduce the dimension of the optical systems in a specific direction, thereby reducing the total system size. Moreover, the optical systems can be configured with anti-vibration function for achieving high image quality. However, to meet the abovementioned requirements, a driving unit of complex structure is required to drive an optical axis folding element, which results in more complex structure and more weight of the optical systems.

Accordingly, how to improve the optical systems for simplifying the structure of the lens assembly, achieving a compact size and maintaining high image quality so as to meet the requirement of high-end-specification electronic devices is an important topic in this field nowadays.

WO2021108972A1 discloses a camera module including a lens, and a photosensitive element and a reflective prism provided at two opposite sides of the lens. The camera module further comprises: a first direction anti-shake structure and a second direction anti-shake structure respectively used to drive the photosensitive element to rotate about a first axis and to drive the photosensitive element to translate along a second axis perpendicular to the first axis; and a third direction anti-shake structure used to drive the reflective prism to rotate about a rotation shaft parallel to the second axis, the axis of the rotation shaft being parallel to a light incident surface.

WO2021025518A1 discloses a camera actuator comprising: a housing; a prism unit disposed in the housing; and a prism drive unit and a shaft unit disposed in the housing so as to tilt the prism unit in a first-axis direction or a second-axis direction, wherein the shaft unit comprises a first shaft arranged in a direction parallel to a first direction, and a second shaft and a third shaft arranged in directions perpendicular to the first direction.

CN113542579A discloses an image sensor anti-shake assembly, a camera device and electronic equipment. The image sensor anti-shake assembly comprises a fixed assembly, a movable assembly and a movable assembly; the movable assembly is matched with the fixed assembly and the movable assembly respectively, so the movable assembly can move or rotate in a first plane relative to the fixed assembly. The moving assembly comprises a moving platform, an image sensor and a permanent magnet, wherein the image sensor and the permanent magnet are fixed on the moving platform. The fixed assembly comprises a circuit board and a coil arranged on the circuit board. The coils and the permanent magnets are in one-to-one correspondence, and after the coils are electrified, driving force can be applied to the permanent magnets, so the moving assembly moves or rotates in the first plane, and the image sensor is driven to change the position, so that the anti-shake compensation function of the image sensor anti-shake assembly is realized; the first plane is perpendicular to the optical axis of the light incident on the image sensor.

CN112312000A discloses an optical anti-shake implementation method, and the method comprises the steps that an image sensor chip carries out the motion compensation, and a lens module does not carry out the motion compensation; the image sensor chip is electrically communicated with an external circuit through a contact part.

CN111596435A discloses a prism motor, which belongs to the technical field of electronic product camera shooting, and comprises: a shell assembly; a prism bracket which is arranged on the shell assembly in an angle-adjustable manner; an electromagnetic driving assembly which comprises a magnetic steel part and a coil part arranged opposite to the magnetic steel part, wherein one of the magnetic steel part and the coil part is arranged on the prism bracket, the other one is arranged on the shell assembly, the electromagnetic driving assembly is used for adjusting the inclination angle of the prism bracket, one of the shell assembly and the prism bracket is provided with a supporting protruding part, the other one of the shell assembly and the prism bracket is provided with a groove, at least part of the supporting protruding part is magnetically sucked into the groove, and the prism bracket can universally move relative to the shell assembly through the supporting protruding part and the groove which make contact with each other.

US20200412958A1 discloses an optical collection module, including a bracket, a rotating assembly, a driving assembly for driving the rotating assembly to rotate, and a restoring module. The rotating assembly includes a main body and a prism installed to the main body. The driving assembly includes a magnet and several coils. The main body is rotatably mounted on the bracket. The magnet is installed to one of the bracket and the main body; the coils are installed to the other of the bracket and the main body. The magnet includes two polar faces along the polarization direction; the coils are opposite to one of the polar faces of the magnet. The invention cooperates with the coils through the magnet to make the rotating assembly rotate in multiple directions relative to the mounting plate.

US20200137274A1 discloses a camera module including a housing defining an internal space; a reflection module disposed in the internal space and including a reflective member and a holder movably supported by an inner wall of the housing; and a lens module provided in the internal space, and including lenses aligned in an optical axis direction so that light reflected by the reflective member is incident to the lenses. The lens module includes lens barrels accommodating the lenses, and the plurality of lens barrels move in an approximate optical axis direction in the internal space while being supported by ball bearings. At least two of the lens barrels share a guide groove to guide movements of the ball bearings.

CN212391698U discloses a camera module. The camera module comprises a base, a lens module, a reflection module, a longitudinal guide rod, a transverse guide rod and a rotating shaft guide rod. The lens module has an optical axis and is arranged on the base. The reflection module comprises a reflection element, and the reflection element is arranged on the base and located on the object side of the lens module. The longitudinal guide rod is arranged between the base and the lens module and extends along a first direction parallel to the optical axis. The transverseguide rod is arranged between the base and the lens module and extends in a second direction perpendicular to the optical axis. The rotating shaft guide rod is arranged between the base and the reflection module and extends in the second direction. The lens module can move along the longitudinal guide rod and the transverse guide rod respectively, and the reflecting element can rotate with the rotating shaft guide rod as a central axis.

EP3779550A1 discloses a lens module and a camera. The lens module includes a first refractive element, a second refractive element, a reflecting element, and a photosensitive element, where the first refractive element and the reflecting element are disposed along a direction of a first optical axis; the second refractive element and the reflecting element are disposed along a direction of a second optical axis; the first optical axis is an optical axis of the first refractive element, the second optical axis is an optical axis of the second refractive element, and the first optical axis is perpendicular to the second optical axis; the second refractive element and the photosensitive element are disposed in parallel; an effective aperture diameter of the first refractive element is greater than an effective aperture diameter of the second refractive element in a height direction of the lens module; and the first optical axis is parallel to the height direction of the lens module, and the second optical axis is perpendicular to the height direction of the lens module.

US20150042870A1 discloses an image sensor and a zoom lens assembly including a plurality of movable lens elements arranged to be moved independent of one another. In some embodiments, the plurality of movable lens elements share an optical axis. Some embodiments include a lens and mirror assembly for admitting light to the miniature camera. The lens and mirror assembly includes a folded optics arrangement such that light enters the lens and mirror assembly through a first lens with an optical axis of the first lens orthogonal to the plurality of moveable lens elements. The lens and mirror assembly includes a mirror for folding the path of light from the optical axis of the first lens to the optical axis of the plurality of movable lens elements, and the lens and mirror assembly further includes an actuator for tilting the mirror.

### SUMMARY

The invention is set out in the appended set of claims.

According to one aspect of the present disclosure, a photographing module according to claim 1 is provided.

According to another aspect of the present disclosure, an electronic device includes the aforementioned photographing module.

### BRIEF DESCRIPTION OF THE DRAWINGS

The disclosure can be better understood by reading the following detailed description of the embodiments, with reference made to the accompanying drawings as follows.

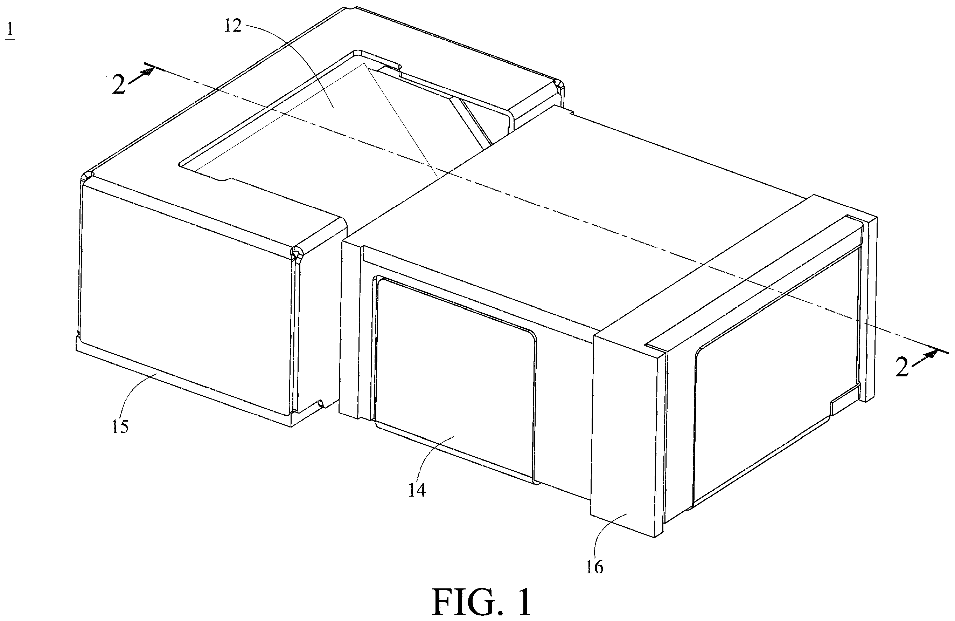

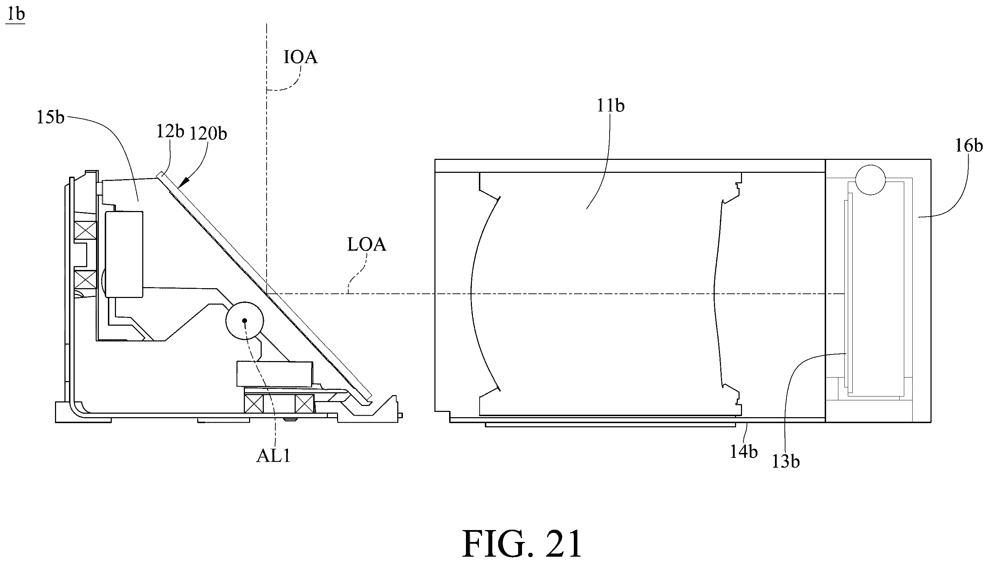

The photographing module according to the 2nd embodiment, illustrated in fig. 21- fig. 33 of the drawings represents an embodiment according to the claimed subject-matter. The photographing modules according to the 1st, 3rd, 4th and 5th embodiments illustrated in fig. 1-20 and fig. 34 - fig. 44 of the drawings represent embodiments not according to the claimed subject-matter.
Fig. 1 is a perspective view of a photographing module according to the 1st embodiment of the present disclosure;
Fig. 2 is a cross-sectional view of the photographing module along line 2-2 in Fig. 1;
Fig. 3 is a schematic view of driving directions of driving modules of the photographing module in Fig. 1;
Fig. 4 is an exploded view of the photographing module in Fig. 1;
Fig. 5 is another exploded view of the photographing module in Fig. 1;
Fig. 6 is a schematic view of the arrangement of some components of a lens assembly and a lens element driving module in Fig. 1;
Fig. 7 is a perspective view of a reflection element and a reflection element driving module in Fig. 1;
Fig. 8 is an exploded view of the reflection element and the reflection element driving module in Fig. 1;
Fig. 9 is another exploded view of the reflection element and the reflection element driving module in Fig. 1;
Fig. 10 is a top view of the reflection element and the reflection element driving module in Fig. 1;
Fig. 11 is a cross-sectional view of the reflection element and the reflection element driving module along line 11-11 in Fig. 10 and an enlarged view of region EL1;
Fig. 12 is a perspective view of an image sensor and an image sensor driving module in Fig. 1;
Fig. 13 is a perspective view of the image sensor and the image sensor driving module in Fig. 1 omitting a cover member thereof;
Fig. 14 is an exploded view of the image sensor and the image sensor driving module in Fig. 12;
Fig. 15 is another exploded view of the image sensor and the image sensor driving module in Fig. 12;
Fig. 16 is a schematic view of the arrangement of a second lateral motor coil and a second lateral motor magnet of a second lateral voice coil motor and a movable plate in Fig. 1;
Fig. 17 to Fig. 19 are schematic views of the image sensor driving module driving the image sensor in Fig. 1;
Fig. 20 is a cross-sectional view of a flexible printed circuit board of the image sensor driving module in Fig. 12;
Fig. 21 is a cross-sectional view of a photographing module according to the 2nd embodiment of the present disclosure;
Fig. 22 is a schematic view of driving directions of driving modules of the photographing module in Fig. 21;
Fig. 23 is an exploded view of the photographing module in Fig. 21;
Fig. 24 is another exploded view of the photographing module in Fig. 21;
Fig. 25 is a perspective view of a reflection element and a reflection element driving module in Fig. 21;
Fig. 26 is an exploded view of the reflection element and the reflection element driving module in Fig. 21;
Fig. 27 is another exploded view of the reflection element and the reflection element driving module in Fig. 21;
Fig. 28 is a top view of the reflection element and the reflection element driving module in Fig. 21;
Fig. 29 is a cross-sectional view of the reflection element and the reflection element driving module along line 29-29 in Fig. 28 and an enlarged view of region EL2;
Fig. 30 is a perspective view of an image sensor and an image sensor driving module in Fig. 21;
Fig. 31 is a perspective view of the image sensor and the image sensor driving module in Fig. 21 omitting a part of a fixed member;
Fig. 32 is an exploded view of the image sensor and the image sensor driving module in Fig. 21 and an enlarged view of region EL3;
Fig. 33 is another exploded view of the image sensor and the image sensor driving module in Fig. 21;
Fig. 34 is a cross-sectional view of a photographing module according to the 3rd embodiment of the present disclosure;
Fig. 35 is a schematic view of driving directions of driving modules of the photographing module in Fig. 34;
Fig. 36 is an exploded view of the photographing module in Fig. 34;
Fig. 37 is another exploded view of the photographing module in Fig. 34;
Fig. 38 is a perspective view of a reflection element and a reflection element driving module in Fig. 34;
Fig. 39 is an exploded view of the reflection element and the reflection element driving module in Fig. 34;
Fig. 40 is another exploded view of the reflection element and the reflection element driving module in Fig. 34;
Fig. 41 is a top view of the reflection element and the reflection element driving module in Fig. 34;
Fig. 42 is a cross-sectional view of the reflection element and the reflection element driving module along line 42-42 in Fig. 41 and an enlarged view of region EL4;
Fig. 43 is a cross-sectional view of a photographing module according to the 4th embodiment of the present disclosure;
Fig. 44 is a cross-sectional view of a photographing module according to the 5th embodiment of the present disclosure;
Fig. 45 is an exploded view of an electronic device according to the 6th embodiment of the present disclosure;
Fig. 46 is one perspective view of an electronic device according to the 7th embodiment of the present disclosure;
Fig. 47 is another perspective view of the electronic device in Fig. 46;
Fig. 48 is a block diagram of the electronic device in Fig. 46;
Fig. 49 shows an image captured by the electronic device in Fig. 46 with an equivalent focal length ranging between 11 mm and 14 mm;
Fig. 50 shows an image captured by the electronic device in Fig. 46 with an equivalent focal length ranging between 22 mm and 30 mm;
Fig. 51 shows an image captured by the electronic device in Fig. 46 with an equivalent focal length ranging between 60 mm and 300 mm; and
Fig. 52 shows an image captured by the electronic device in Fig. 46 with an equivalent focal length ranging between 400 mm and 600 mm.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

The present disclosure provides a photographing module. The photographing module includes a lens assembly, a reflection element, an image sensor and a lens element driving module. The lens assembly includes at least one lens element. The reflection element is located on an object side of the lens assembly, and the reflection element has a reflection surface configured to redirect an incident light traveling along an incident optical axis towards the lens assembly. The reflection element is, for example, a reflection mirror having a reflection surface or a prism having a reflection surface, but the present disclosure is not limited thereto. Light traveling along the incident optical axis reaches the reflection surface and is reflected by the reflection surface, and the light reflected by the reflection surface changes direction and travels into the lens assembly and passes through the at least one lens element. The image sensor is disposed on an image surface of the lens assembly, and the image sensor is configured to receive light coming from the lens assembly. In some examples, the reflection element may have at least two reflection surfaces, or the photographing module may further include another reflection element located on the object side or an image side of the lens assembly, so that light changes directions at least twice in the photographing module so as to be applicable to various optical systems of different requirements.

The lens element driving module includes an axial voice coil motor, and the lens element driving module drives the lens assembly to move along a lens optical axis of the lens assembly by the axial voice coil motor. The lens element driving module may further include a fixed base, a lens element holding member and a plurality of rollable connection members. The lens assembly is disposed on the lens element holding member, and the lens element holding member is movable relative to the fixed base. The rollable
connection members are located between and in physical contact with the fixed base and the lens element holding member. Therefore, it is favorable for improving the module reliability.

According to the present disclosure, the photographing module further includes a reflection element driving module. The reflection element driving module includes a carrier, a holder, a rotating connection part, a curved recess structure and a first lateral voice coil motor. The reflection element is disposed on the carrier. The holder and the carrier are disposed corresponding to each other, and the carrier is movable relative to the holder. The rotating connection part and the curved recess structure are located between the holder and the carrier, the rotating connection part is disposed on one of the holder and the carrier, and the curved recess structure is disposed on the other of the holder and the carrier. The rotating connection part is in physical contact with the curved recess structure, and the curved recess structure is rotatable relative to the rotating connection part. Therefore, the rotating connection part is favorable for increasing the rotation stability of the carrier. In some examples, the rotating connection part and one of the carrier and the holder can be one-piece formed so as to simplify the components of the module.

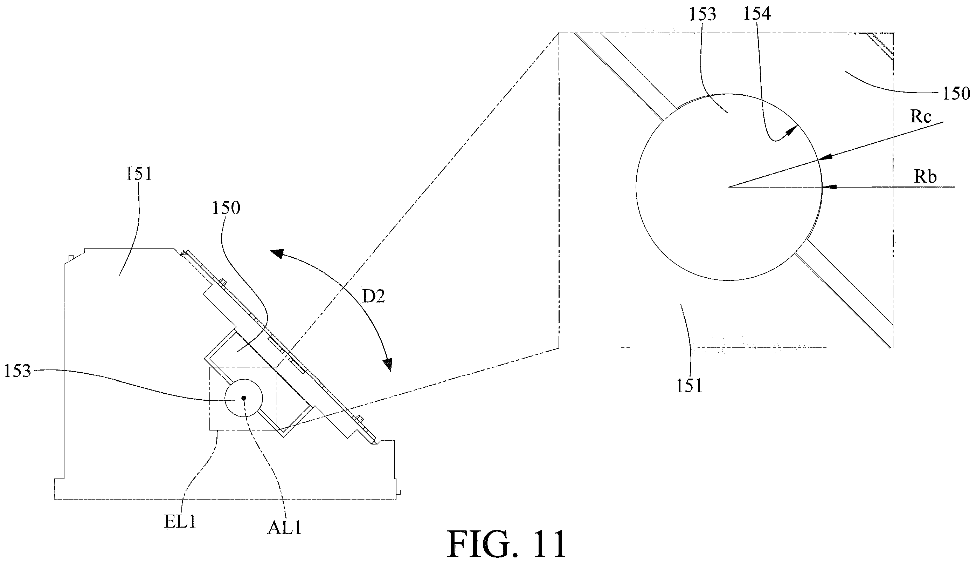

When a curvature radius of the curved recess structure is Rc, and a curvature radius of the rotating connection part is Rb, the following condition can be satisfied: 0.7 ≤ Rb/Rc ≤ 1. Therefore, the curved recess structure and the rotating connection part having close curvature radius values can fit each other much better so as to increase rotation stability and rotation accuracy. Moreover, the following condition can also be satisfied: 0.85 ≤ Rb/Rc ≤ 1. Please refer to Fig. 11, which shows a schematic view of Rc and Rb according to the 1st embodiment of the present disclosure.

The first lateral voice coil motor is configured to drive the carrier to rotate around a first axis, and the first axis passes through the rotating connection part. The first axis can be orthogonal to the incident optical axis, and the first axis can be orthogonal to the lens optical axis. Therefore, the height of the photographing module is reduced by using the carrier to bring the reflection element to rotate so as to stabilize the image.

The reflection element driving module may further include an elastic element. The elastic element is connected to the holder and the carrier, and the elastic element exerts a preload force on the carrier in a direction towards the holder. Therefore, the carrier can remain stable when the carrier is not driven.

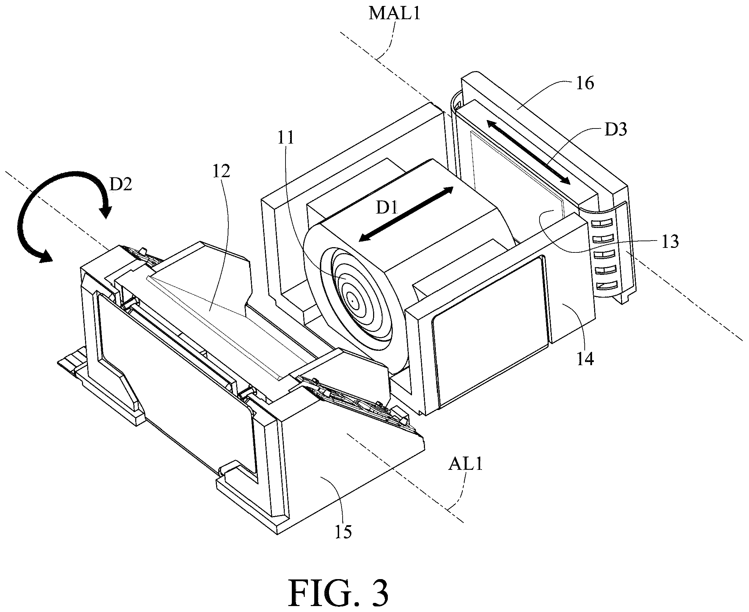

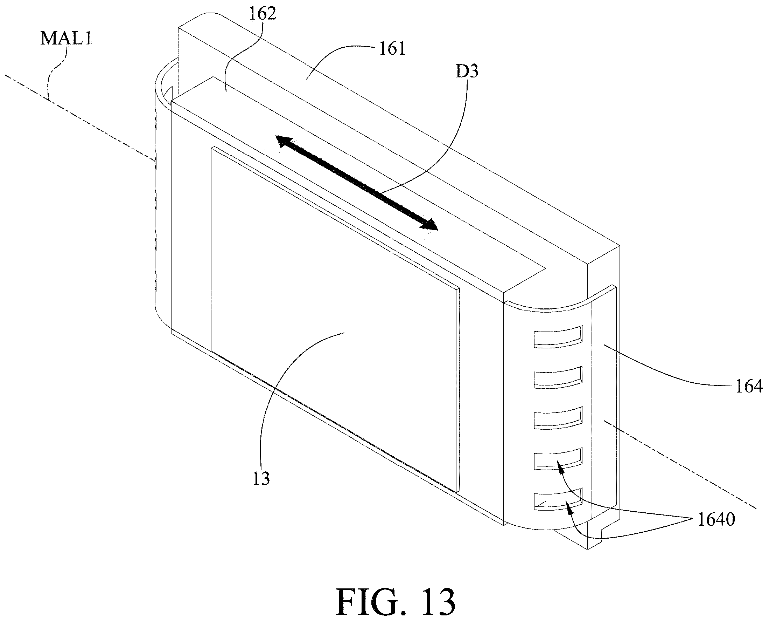

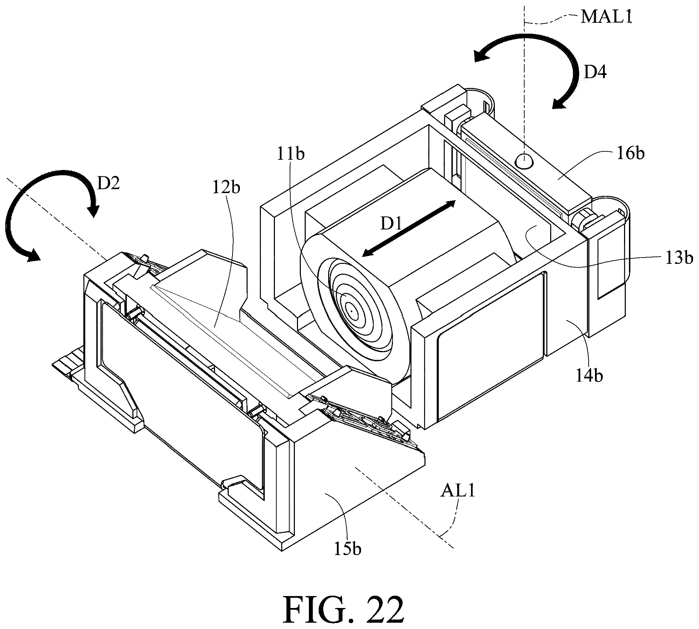

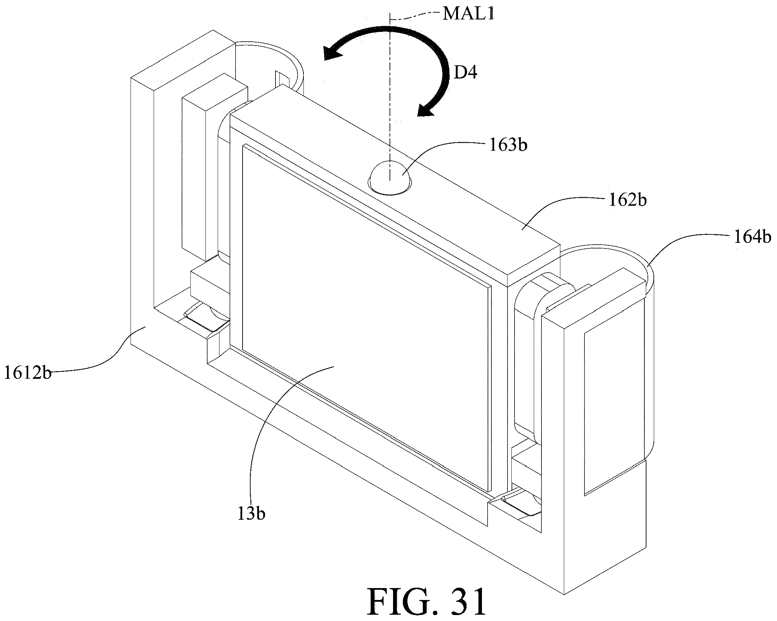

According to the present disclosure, the photographing module further includes an image sensor driving module. The image sensor driving module includes a fixed member, a movable plate, a plurality of rollable elements and a second lateral voice coil motor. The image sensor is disposed on the movable plate, and the movable plate has a degree of freedom and is movable relative to the fixed member. The degree of freedom is defined by a first dynamic axis, and the first dynamic axis is orthogonal to the lens optical axis. In examples not according to the claimed subject-matter, the degree of freedom enables linear motion of the movable plate along the first dynamic axis, and the first dynamic axis can be orthogonal to the incident optical axis. Therefore, it is favorable for reducing the thickness of the photographing module. Please refer to Fig. 3 and Fig. 13, which show a moving direction of the movable plate 162 according to the 1st embodiment of the present disclosure, where the degree of freedom of the movable plate 162 is linear motion along the first dynamic axis MAL1, and the first dynamic axis MAL1 is orthogonal to the incident optical axis IOA. In examples according to the claimed subject-matter, the degree of freedom enables rotation of the movable plate around the first dynamic axis, and the first dynamic axis is parallel to the incident optical axis. Therefore, it is favorable for reducing the thickness of the photographing module. Please refer to Fig. 22 and Fig. 31, which show a moving direction of the movable plate 162b according to the 2nd embodiment of the present disclosure, where the degree of freedom enables rotation of the movable plate 162b around the first dynamic axis MAL1, and the first dynamic axis MAL1 is parallel to the incident optical axis IOA. In some examples, the movable plate may further have another degree of freedom, the another degree of freedom is defined by a second dynamic axis, and the first dynamic axis, the second dynamic axis and the lens optical axis are orthogonal to one another. In addition, the another degree of freedom may be linear motion along the second dynamic axis or may be rotation around the second dynamic axis.

The rollable elements are located between and in physical contact with the fixed member and the movable plate. Therefore, it is favorable for the image sensor driving module to have better reliability.

The second lateral voice coil motor is configured to drive the movable plate to move so that the image sensor can be moved in directions based on the first dynamic axis. In addition, the axial voice coil motor of the lens element driving module may include an axial motor coil and an axial motor magnet, each of the axial motor coil and the axial motor magnet has an axial motor corresponsive surface, and the two axial motor corresponsive surfaces face each other. Furthermore, the second lateral voice coil motor may include a second lateral motor coil and a second lateral motor magnet, each of the second lateral motor coil and the second lateral motor magnet has a second lateral motor corresponsive surface, and the two second lateral motor corresponsive surfaces face each other. In some examples, the axial motor corresponsive surface and the second lateral motor corresponsive surface are parallel to the incident optical axis. Therefore, it is favorable for reducing the height of the lens element driving module and the height of the image sensor driving module, so that the photographing module can be in a compact size.

Furthermore, the first lateral voice coil motor may include a first lateral motor coil and a first lateral motor magnet, each of the first lateral motor coil and the first lateral motor magnet has a first lateral motor corresponsive surface, and the two first lateral motor corresponsive surfaces face each other. In some examples, the axial motor corresponsive surfaces and the first lateral motor corresponsive surfaces are parallel to the incident optical axis. Therefore, it is favorable for reducing the height of the lens element driving module and the height of the reflection element driving module, so that the photographing module can be in a compact size.

The axial motor magnet of the axial voice coil motor can be disposed on the lens element holding member. In some examples, the axial voice coil motor may further include a ferromagnetic element disposed corresponding to the axial motor magnet, such that an attractive force generated between the ferromagnetic element and the axial motor magnet can exert a pre-pressure on the lens element holding member so as to increase driving stability.

The image sensor driving module may further include a flexible printed circuit board connected to the movable plate and the fixed member, and the flexible printed circuit board generates a force acting on the movable plate after the movable plate is driven to move. Therefore, the force generated by the flexible printed circuit board is favorable for moving the movable plate back to its original position without using additional components, thereby reducing the number of components of the module. In some examples, the flexible printed circuit board may include an elastic adjustment structure, the elastic adjustment structure may be a plurality of through holes or additional elastic member, and the elastic modulus of the flexible printed circuit board can be adjusted according to conditions, such as the quantity and the shape of the elastic adjustment structure.

In an example where the photographing module includes both of the reflection element driving module and the image sensor driving module, two-axis image stabilization can be provided by the reflection element driving module and the image sensor driving module. Therefore, the reflection element driving module and the image sensor driving module each provides one-axis image stabilization, so that the thickness of the photographing module can be reduced, and the control difficulty can be reduced.

According to the present disclosure, in the photographing module, each of the driving modules (i.e., the lens element driving module, the reflection element driving module and the image sensor driving module) may be provided with a position sensing element. The position sensing element measures displacements by detecting a change of magnetic force, and it is favorable for driving controls of the driving modules.

The present disclosure provides an electronic device including the aforementioned photographing module. Therefore, the electronic device provided with the photographing module can be in a compact size.

According to the present disclosure, the aforementioned features and conditions can be utilized in numerous combinations so as to achieve corresponding effects.

According to the above description of the present disclosure, the following specific embodiments are provided for further explanation.

### 1st Embodiment (this embodiment is not part of the present invention)

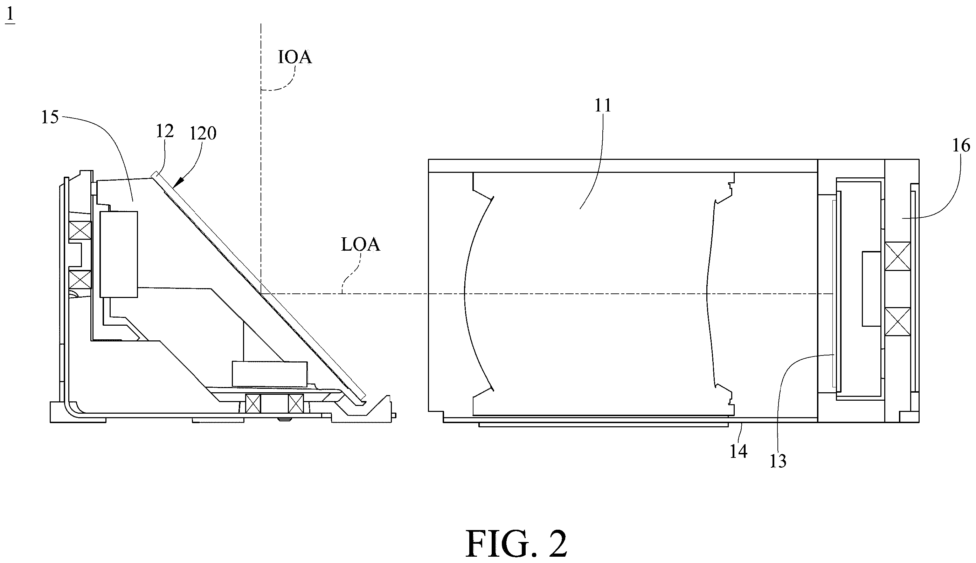

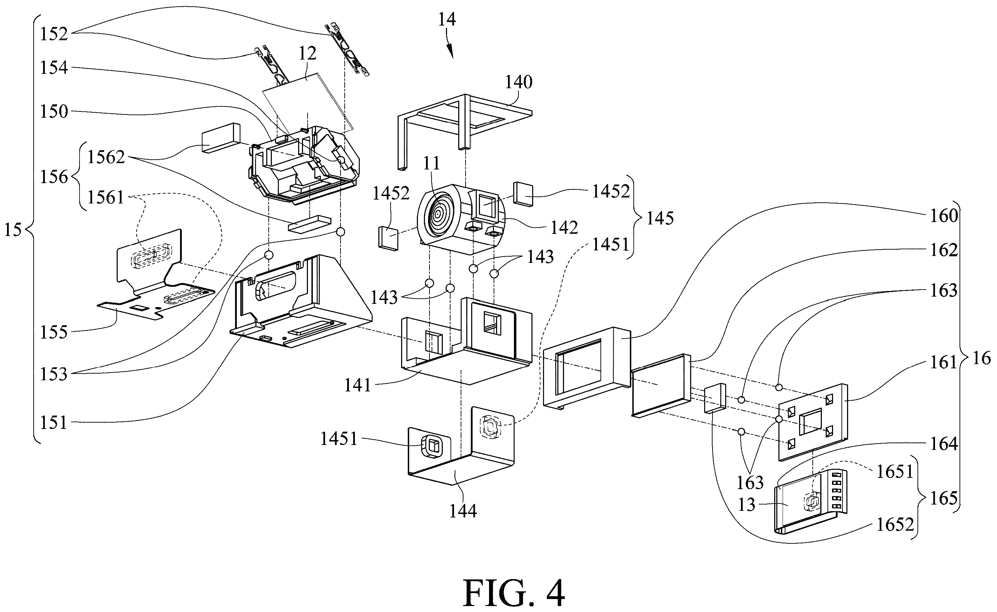

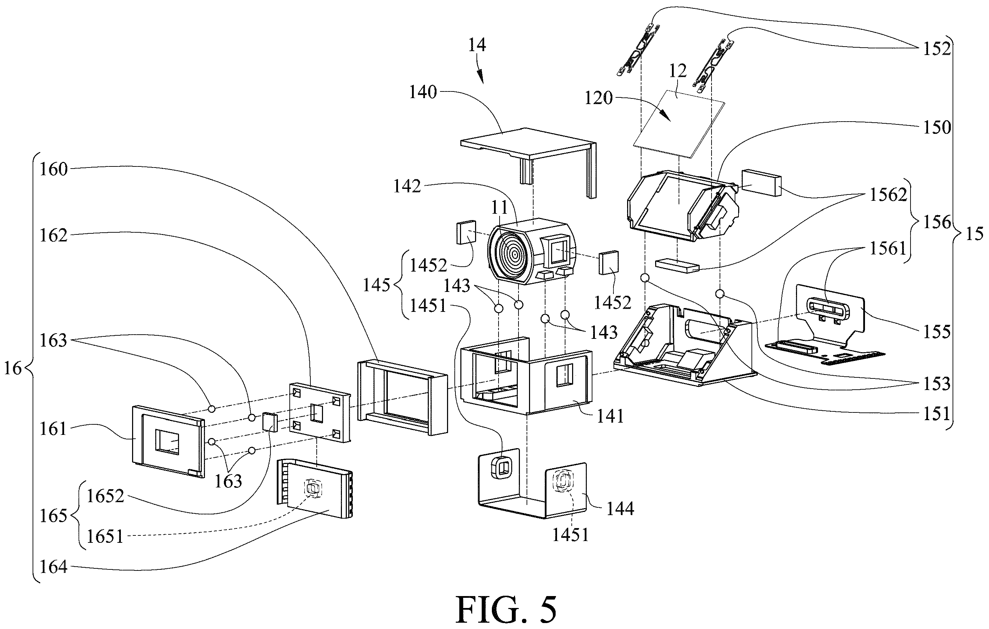

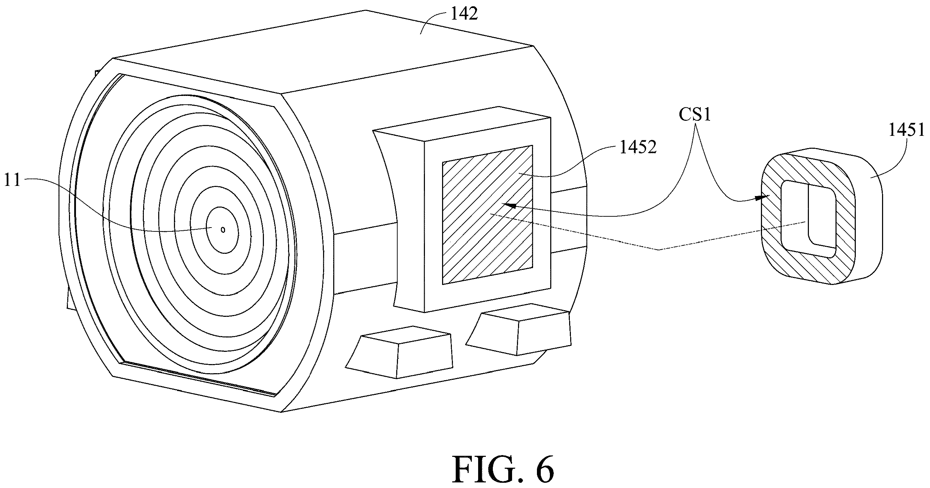

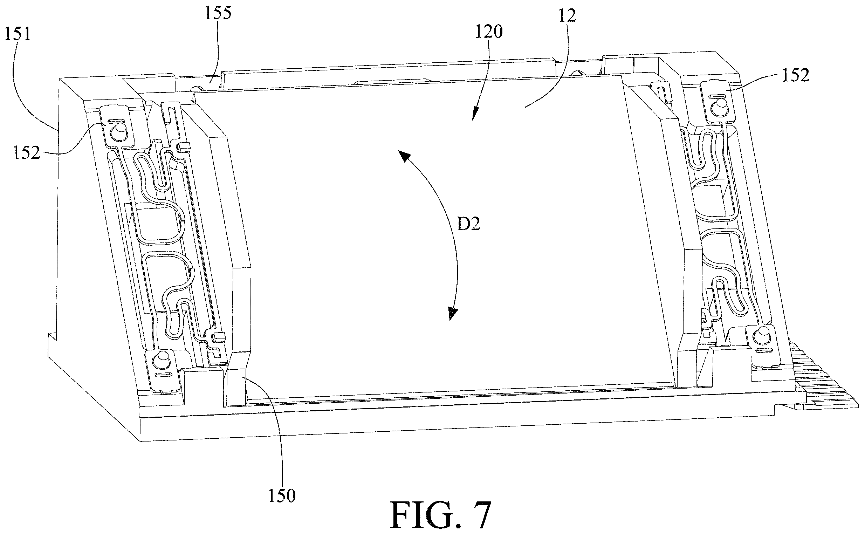

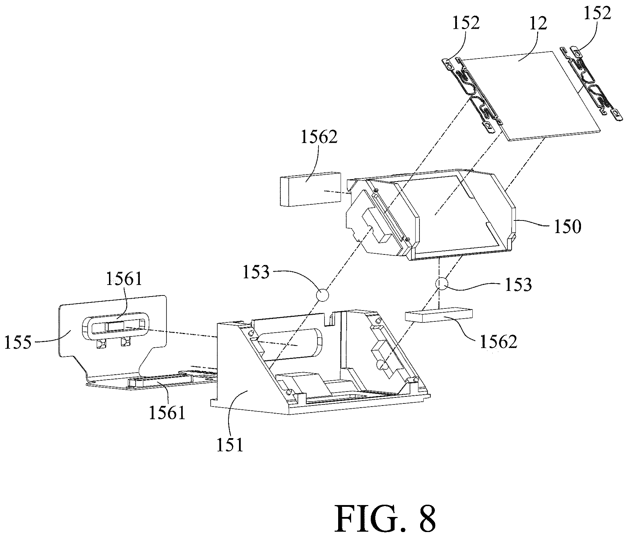

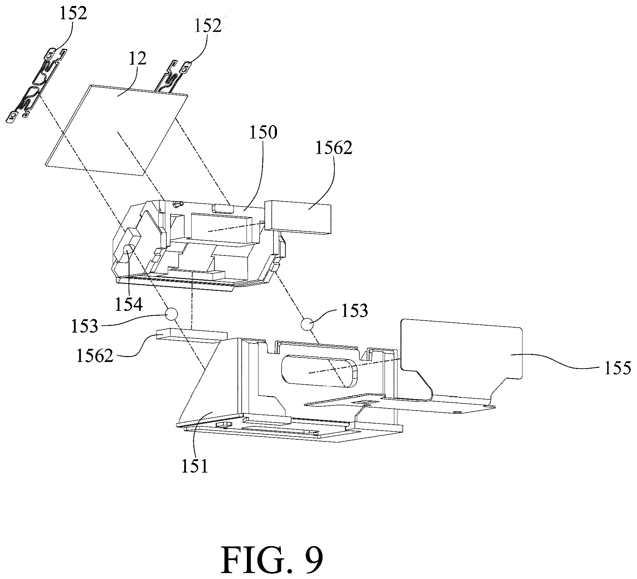

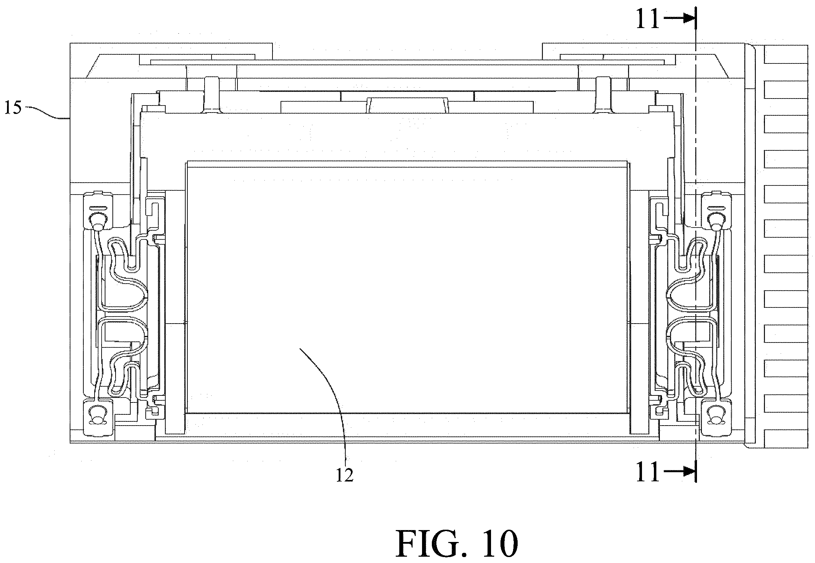

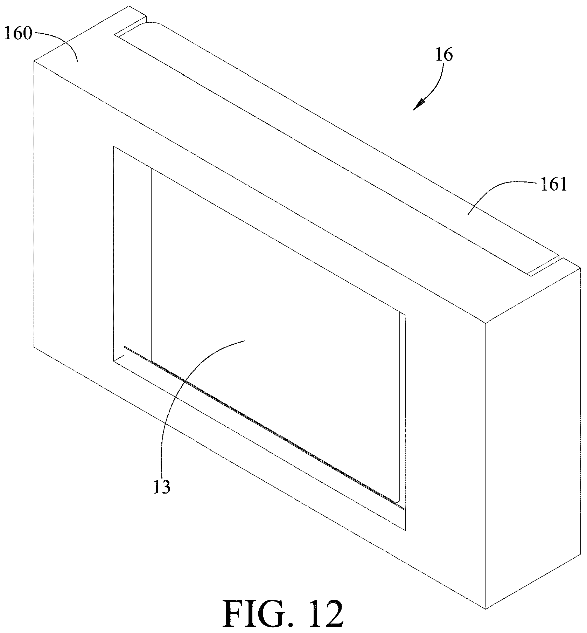

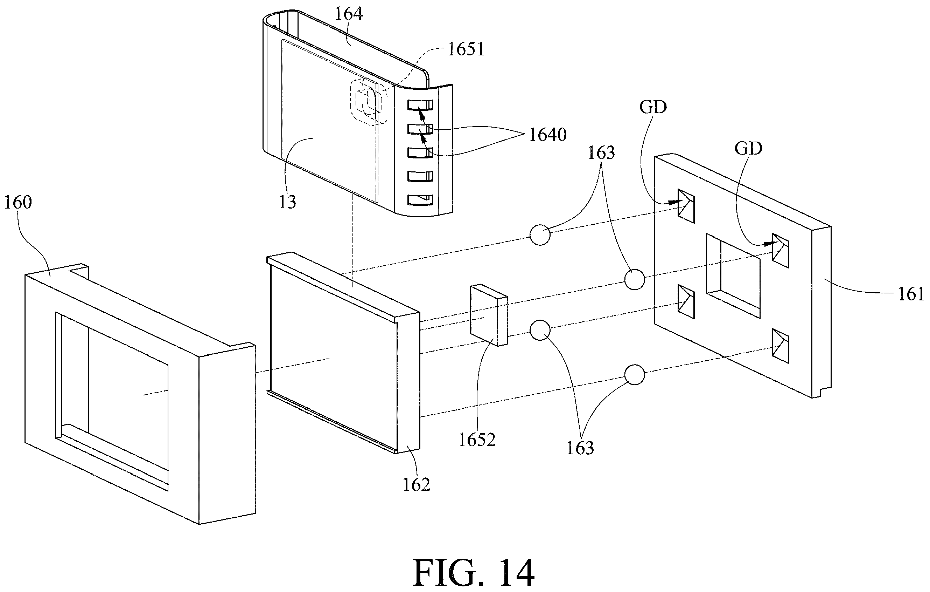

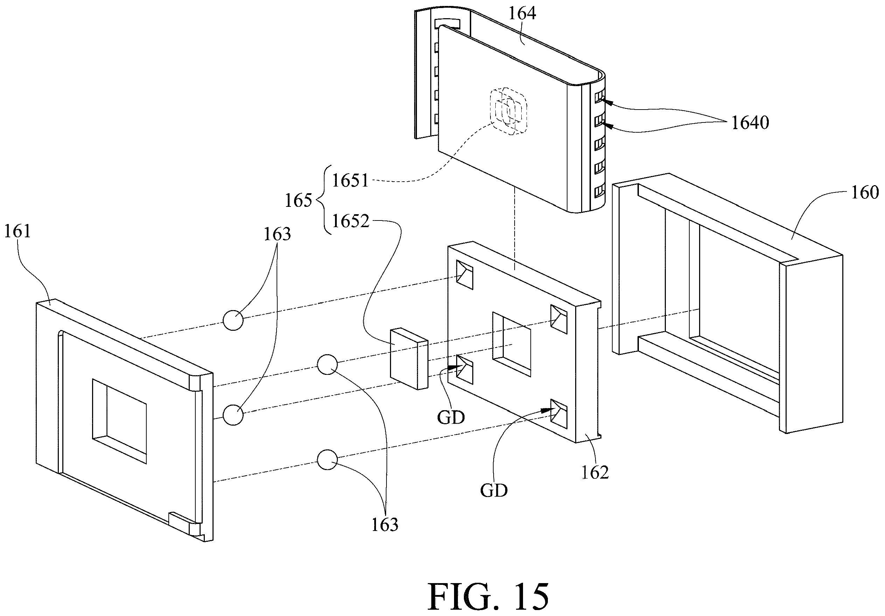

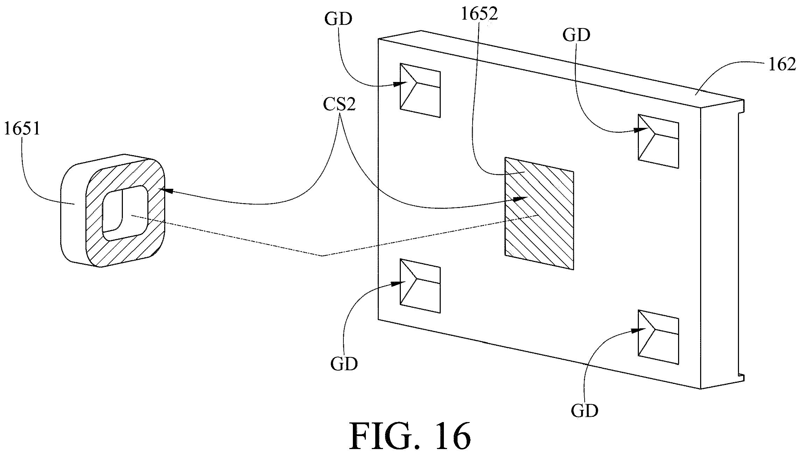

Fig. 1 is a perspective view of a photographing module according to the 1st embodiment of the present disclosure, Fig. 2 is a cross-sectional view of the photographing module along line 2-2 in Fig. 1, Fig. 3 is a schematic view of driving directions of driving modules of the photographing module in Fig. 1, Fig. 4 is an exploded view of the photographing module in Fig. 1, Fig. 5 is another exploded view of the photographing module in Fig. 1, Fig. 6 is a schematic view of the arrangement of some components of a lens assembly and a lens element driving module in Fig. 1, Fig. 7 is a perspective view of a reflection element and a reflection element driving module in Fig. 1, Fig. 8 is an exploded view of the reflection element and the reflection element driving module in Fig. 1, Fig. 9 is another exploded view of the reflection element and the reflection element driving module in Fig. 1, Fig. 10 is a top view of the reflection element and the reflection element driving module in Fig. 1, Fig. 11 is a cross-sectional view of the reflection element and the reflection element driving module along line 11-11 in Fig. 10 and an enlarged view of region EL1, Fig. 12 is a perspective view of an image sensor and an image sensor driving module in Fig. 1, Fig. 13 is a perspective view of the image sensor and the image sensor driving module in Fig. 1 omitting a cover member thereof, Fig. 14 is an exploded view of the image sensor and the image sensor driving module in Fig. 12, Fig. 15 is another exploded view of the image sensor and the image sensor driving module in Fig. 12, and Fig. 16 is a schematic view of the arrangement of a second lateral motor coil and a second lateral motor magnet of a second lateral voice coil motor and a movable plate in Fig. 1.

In this embodiment, a photographing module 1 includes a lens assembly 11, a reflection element 12, an image sensor 13, a lens element driving module 14, a reflection element driving module 15 and an image sensor driving module 16.

The lens assembly 11 includes at least one lens element. The reflection element 12 is a reflection mirror and located on an object side of the lens assembly 11, and the reflection element 12 has a reflection surface 120 configured to redirect an incident light traveling along an incident optical axis IOA towards the lens assembly 11. The image sensor 13 is disposed on an image surface of the lens assembly 11, and the image sensor 13 is configured to receive light coming from the lens assembly 11. As shown in Fig. 2, light traveling along the incident optical axis IOA hits the reflection surface 120 and is reflected by the reflection surface 120, and the light reflected by the reflection surface 120 changes direction and travels into the lens assembly 11 and passes through the at least one lens element to thereby reach the image sensor 13.

The lens element driving module 14 includes an upper cover 140, a fixed base 141, a lens element holding member 142, a plurality of rollable connection members 143, a flexible printed circuit board 144 and an axial voice coil motor 145.

The upper cover 140 is disposed on the fixed base 141 and together form an accommodation space. The lens element holding member 142 is disposed in the accommodation space, and the lens assembly 11 is disposed on the lens element holding member 142. The rollable connection members 143 are located between and in physical contact with the fixed base 141 and the lens element holding member 142, so that the lens element holding member 142 is movable relative to the fixed base 141. In this embodiment, the rollable connection members 143 are, for example, balls.

The flexible printed circuit board 144 is attached to the fixed base 141.

The axial voice coil motor 145 includes two axial motor coils 1451 and two axial motor magnets 1452. The axial motor coils 1451 are disposed on the flexible printed circuit board 144, and the axial motor magnets 1452 are disposed on the lens element holding member 142. As shown in Fig. 6, each of the axial motor coil 1451 and the axial motor magnet 1452 corresponding to each other has an axial motor corresponsive surface CS1, and the two axial motor corresponsive surfaces CS1 face each other. The lens element driving module 14 is configured to drive the lens assembly 11 to move in a direction D1 parallel to a lens optical axis LOA of the lens assembly 11 (as shown in Fig. 2 and Fig. 3) by applying a force generated by an electromagnetic interaction between the axial motor coils 1451 and the axial motor magnets 1452 of the axial voice coil motor 145.

As shown in Fig. 7 to Fig. 10, the reflection element driving module 15 includes a carrier 150, a holder 151, two rotating connection parts 153, two curved recess structures 154, a flexible printed circuit board 155, a first lateral voice coil motor 156 and two elastic elements 152.

The reflection element 12 is disposed on the carrier 150, and the holder 151 and the carrier 150 are disposed corresponding to each other. Furthermore, the carrier 150 is movable relative to the holder 151.

In detail, the rotating connection parts 153 and the curved recess structures 154 are located between the holder 151 and the carrier 150, the rotating connection parts 153 are balls and disposed on the holder 151, and the curved recess structures 154 are disposed on the carrier 150. The rotating connection parts 153 are respectively in physical contact with the curved recess structures 154, and the curved recess structures 154 are rotatable relative to the rotating connection parts 153, so that the carrier 150 is movable relative to the holder 151. As shown in Fig. 11, when a curvature radius of the curved recess structure 154 is Rc, and a curvature radius of the rotating connection part 153 is Rb, the following conditions are satisfied: Rc = 0.51 mm; Rb = 0.5 mm; and Rb/Rc = 0.98.

The flexible printed circuit board 155 is disposed on the holder 151.

The first lateral voice coil motor 156 includes two first lateral motor coils 1561 and two first lateral motor magnets 1562, the first lateral motor coils 1561 are disposed on the flexible printed circuit board 155, and the first lateral motor magnets 1562 are disposed on the carrier 150. The reflection element driving module 15 is configured to drive the carrier 150 to rotate in a rotation direction D2 around a first axis AL1 (as shown in Fig. 3, Fig. 7 and Fig. 11) by applying a force generated by an electromagnetic interaction between the first lateral motor coils 1561 and the first lateral motor magnets 1562 of the first lateral voice coil motor 156. The first axis AL1 passes through the rotating connection parts 153, and the first axis AL1 is orthogonal to the incident optical axis IOA and orthogonal to the lens optical axis LOA.

The elastic elements 152 are connected to the holder 151 and the carrier 150, and the elastic elements 152 exert a preload force on the carrier 150 in a direction towards the holder 151, so that the carrier 150 can remain stable when the carrier 150 is not driven.

As shown in Fig. 12 to Fig. 15, the image sensor driving module 16 includes a cover member 160, a fixed member 161, a movable plate 162, a plurality of rollable elements 163, a flexible printed circuit board 164 and a second lateral voice coil motor 165.

The cover member 160 is disposed on the fixed member 161 and together form a storage space to accommodate the movable plate 162.

The rollable elements 163 are balls, and the rollable elements 163 are located between and in physical contact with the fixed member 161 and the movable plate 162. In specific, each of the fixed member 161 and the movable plate 162 has a plurality of guiding grooves GD for the rollable elements 163 to be movably disposed therein, and the rollable elements 163 can be guided by the guiding grooves GD to move in a predetermined direction. Therefore, the movable plate 162 has a degree of freedom and is movable relative to the fixed member 161. The degree of freedom is defined by a first dynamic axis MAL1, and the first dynamic axis MAL1 is orthogonal to the lens optical axis LOA. In this embodiment, the degree of freedom of the movable plate 162 is linear motion along the first dynamic axis MAL1, and the first dynamic axis MAL1 is orthogonal to the incident optical axis IOA.

In this embodiment, the movable plate 162 has one degree of freedom as an example, but the present disclosure is not limited thereto. In this and other embodiments, the movable plate may further have another degree of freedom (i.e., the movable plate may have two degrees of freedom), where said another degree of freedom is defined by a second dynamic axis, and the first dynamic axis, the second dynamic axis and the lens optical axis are orthogonal to one another. In addition, said another degree of freedom may be linear motion along the second dynamic axis or may be rotation around the second dynamic axis.

The image sensor 13 is disposed on the flexible printed circuit board 164, the flexible printed circuit board 164 is connected to the movable plate 162 and the fixed member 161, and the flexible printed circuit board 164 is movable along with the movable plate 162 relative to the fixed member 161, so that the image sensor 13 is also movable relative to the fixed member 161. That is, the image sensor 13 is disposed on the movable plate 162 via the flexible printed circuit board 164 and movable along with the movable plate 162. In this embodiment, the flexible printed circuit board 164 includes an elastic adjustment structure 1640, and the elastic adjustment structure 1640 is a plurality of through holes.

The second lateral voice coil motor 165 includes a second lateral motor coil 1651 and a second lateral motor magnet 1652. The second lateral motor coil 1651 is disposed on the flexible printed circuit board 164, and the second lateral motor magnet 1652 is disposed on the movable plate 162. As shown in Fig. 16, each of the second lateral motor coil 1651 and the second lateral motor magnet 1652 has a second lateral motor corresponsive surface CS2, and the two second lateral motor corresponsive surfaces CS2 face each other. The image sensor driving module 16 is configured to drive the movable plate 162 to move in a direction D3 parallel to the first dynamic axis MAL1 (as shown in Fig. 3 and Fig. 13) by applying a force generated by an electromagnetic interaction between the second lateral motor coil 1651 and the second lateral motor magnet 1652 of the second lateral voice coil motor 165, so that the image sensor 13 disposed on the flexible printed circuit board 164 can be moved in direction(s) based on the first dynamic axis MAL1. In this embodiment, the axial motor corresponsive surfaces CS1 and the second lateral motor corresponsive surfaces CS2 are parallel to the incident optical axis IOA.

In this embodiment, the fixed member 161 may be provided with a ferromagnetic element (not shown) corresponding to the second lateral motor magnet 1652, such that an attractive force is generated between the movable plate 162 and the fixed member 161 so as to increase driving stability.

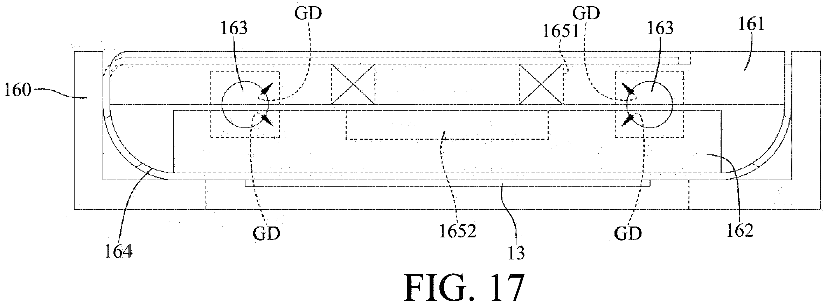

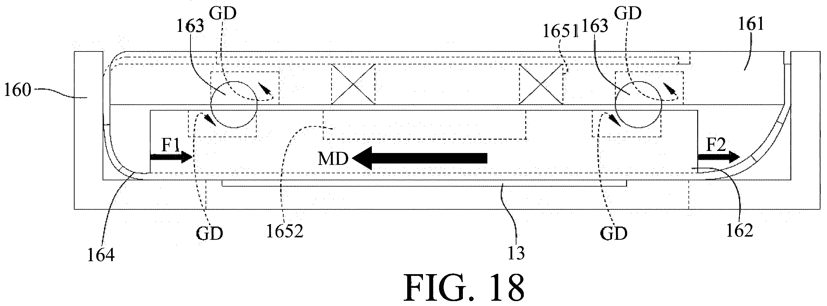

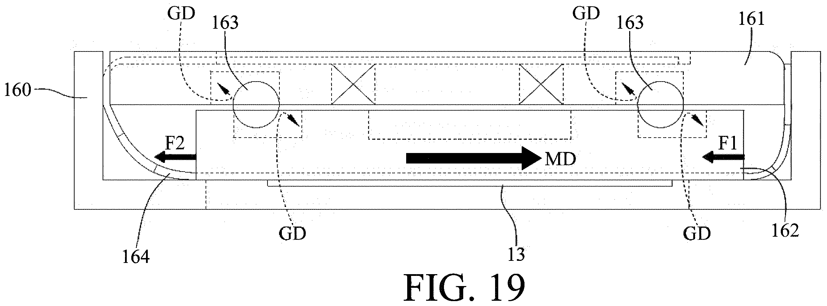

Please refer to Fig. 17 to Fig. 19, which show the image sensor being driven by the image sensor driving module in Fig. 1. Fig. 17 shows that the movable plate 162 is not driven by the second lateral voice coil motor 165 and located in an original position, and Fig. 18 and Fig. 19 respectively show that the movable plate 162 is driven by the second lateral voice coil motor 165 to move along the first dynamic axis MAL1 respectively to the left and to the right of the page.

The flexible printed circuit board 164 generates a force (e.g., restoring force) acting on the movable plate 162 after the movable plate 162 is driven to move. In specific, as shown in Fig. 18 and Fig. 19, after the movable plate 162 is driven by the second lateral voice coil motor 165 to move from the original position to the left or the right, the flexible printed circuit board 164 is pushed by the movable plate 162, then the flexible printed circuit board 164 deforms and thus generates a pushing force F1 and a pulling force F2 acting on the movable plate 162. When the movable plate 162 is no longer driven by the second lateral voice coil motor 165, the movable plate 162 is moved to the original position by the pushing force F1 and the pulling force F2 exerted by the flexible printed circuit board 164. Note that directions of the pushing force F1 and the pulling force F2 are opposite to a moving direction MD of the movable plate 162.

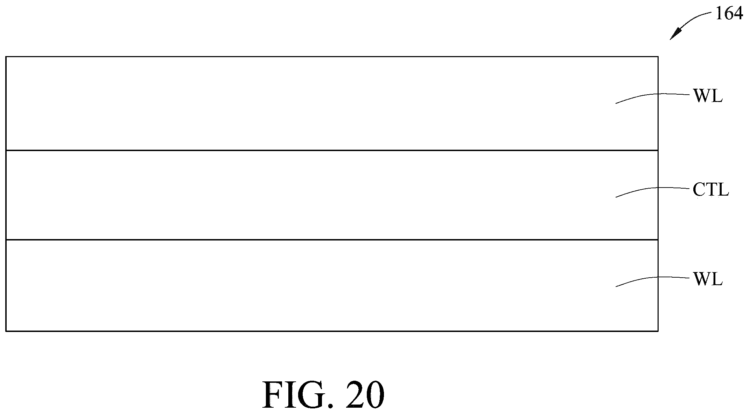

Please refer to Fig. 20, which is a cross-sectional view of a flexible printed circuit board of the image sensor driving module in Fig. 12. In this embodiment, the flexible printed circuit board 164 of the image sensor driving module 16 includes two cladding layers WL and a wire layer CTL wrapped in the cladding layers WL, so that the wire layer CTL won't be damaged when the flexible printed circuit board 164 is deformed during the operation of the image sensor driving module 16.

In this embodiment, the photographing module 1 includes the reflection element driving module 15 and the image sensor driving module 16, and two-axis image stabilization can be provided by the reflection element driving module 15 and the image sensor driving module 16. Therefore, the two driving modules 15 and 16 each provides one-axis image stabilization, so that the thickness of the photographing module 1 can be reduced, and the control difficulty of the driving modules 15 and 16 can be reduced.

### 2nd Embodiment

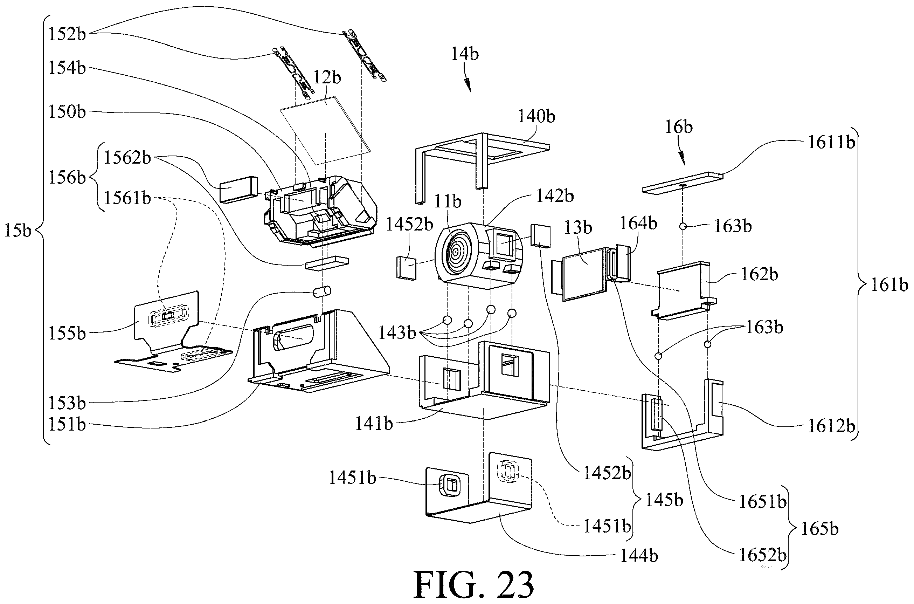

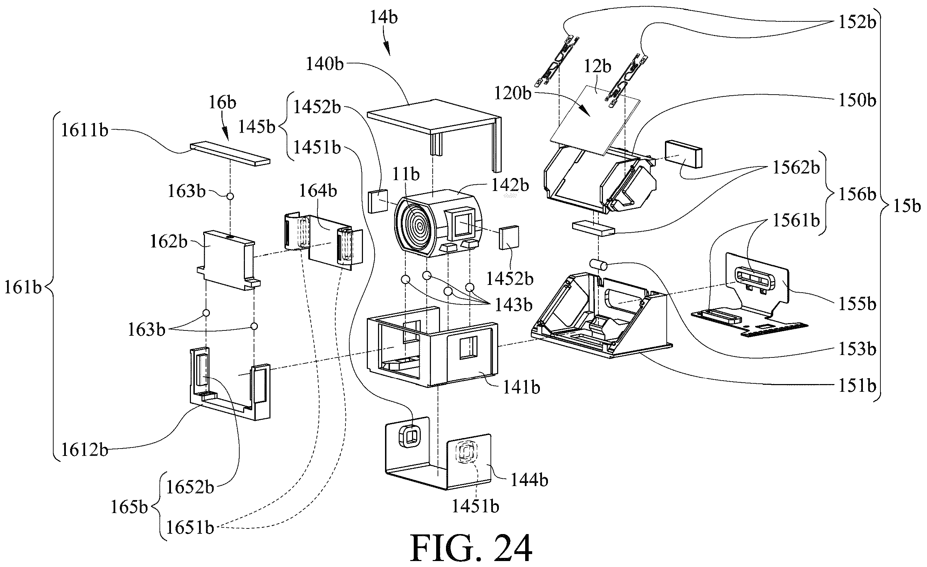

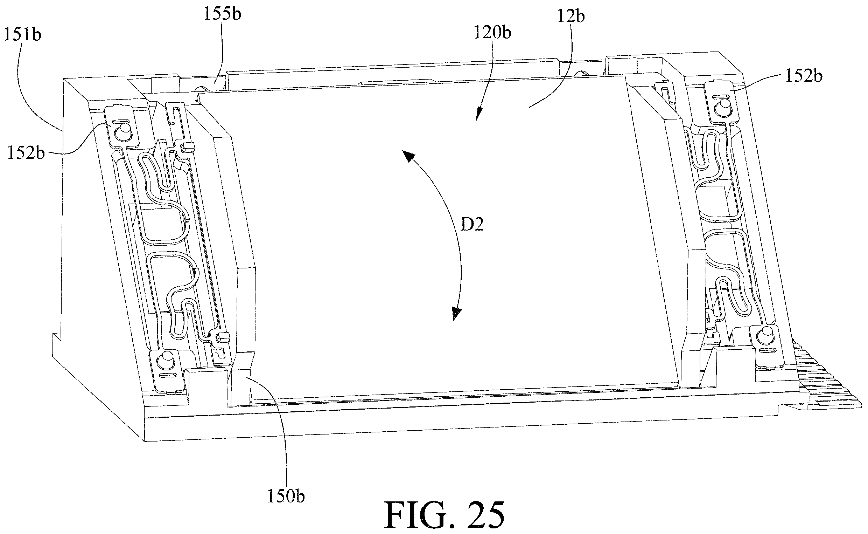

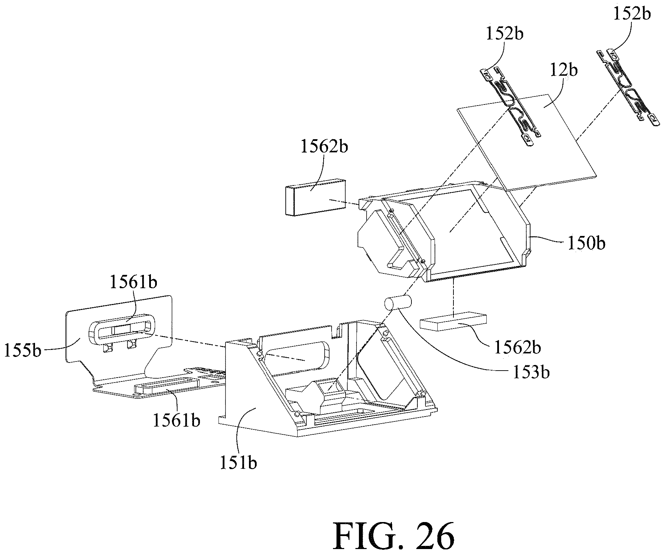

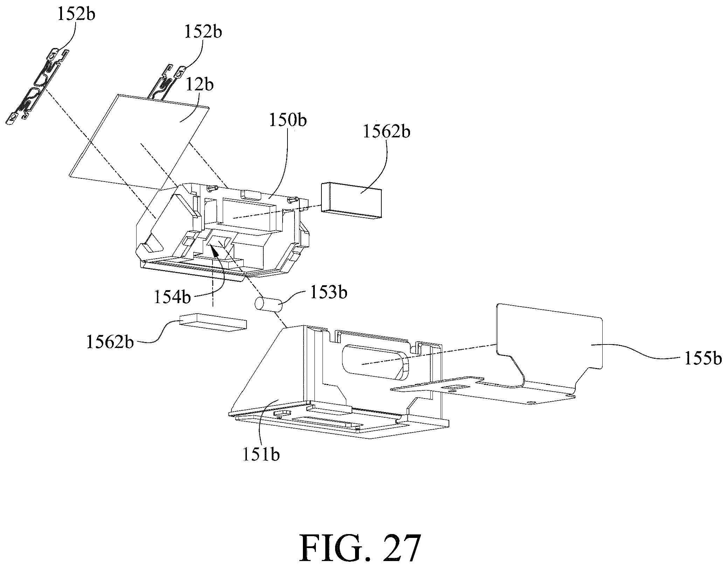

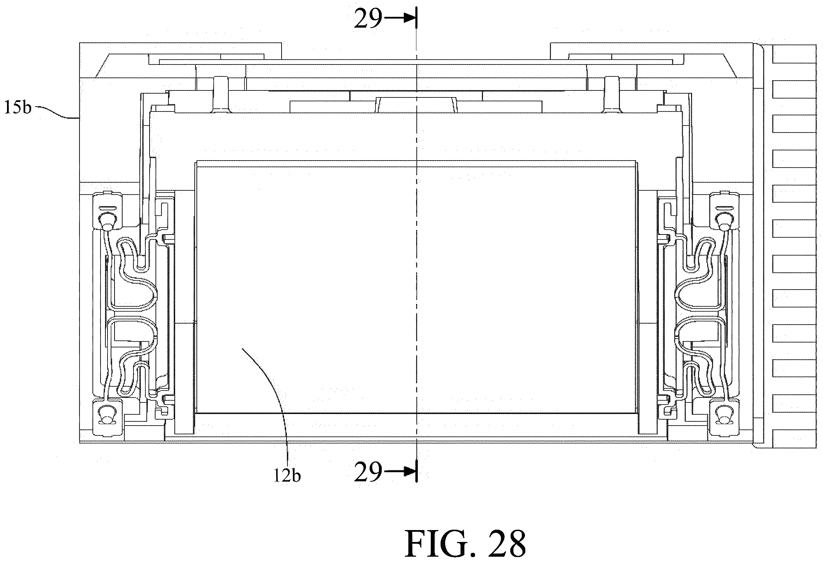

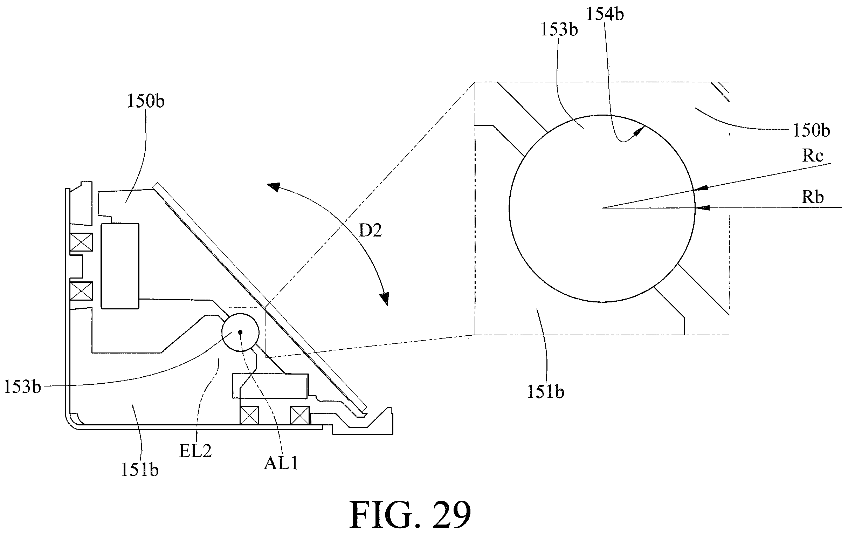

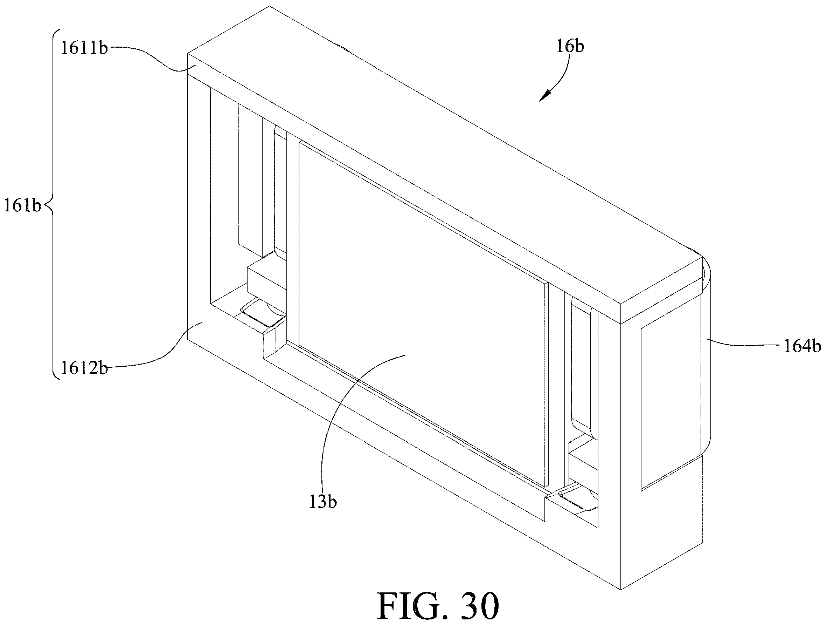

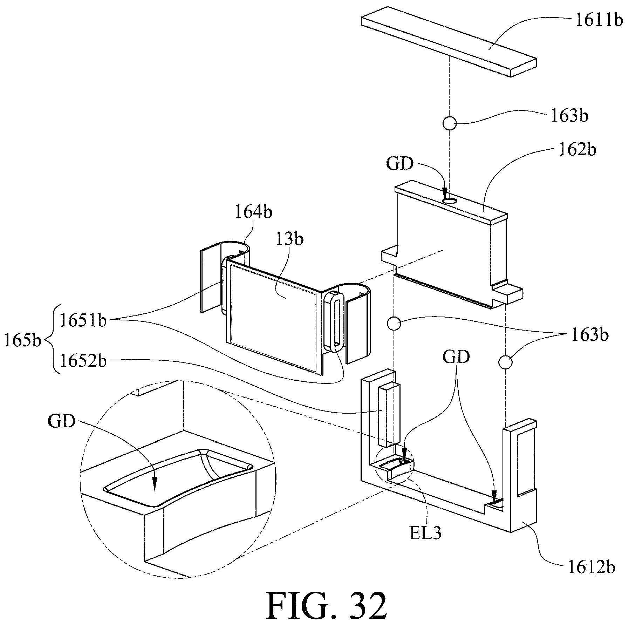

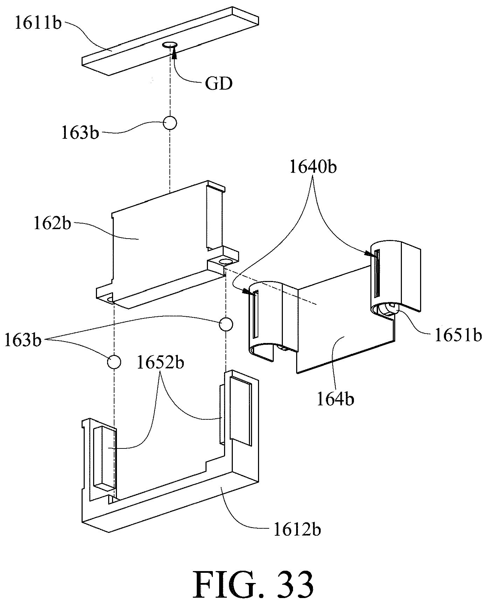

Fig. 21 is a cross-sectional view of a photographing module according to the 2nd embodiment of the present disclosure, Fig. 22 is a schematic view of driving directions of driving modules of the photographing module in Fig. 21, Fig. 23 is an exploded view of the photographing module in Fig. 21, Fig. 24 is another exploded view of the photographing module in Fig. 21, Fig. 25 is a perspective view of a reflection element and a reflection element driving module in Fig. 21, Fig. 26 is an exploded view of the reflection element and the reflection element driving module in Fig. 21, Fig. 27 is another exploded view of the reflection element and the reflection element driving module in Fig. 21, Fig. 28 is a top view of the reflection element and the reflection element driving module in Fig. 21, Fig. 29 is a cross-sectional view of the reflection element and the reflection element driving module along line 29-29 in Fig. 28 and an enlarged view of region EL2, Fig. 30 is a perspective view of an image sensor and an image sensor driving module in Fig. 21, Fig. 31 is a perspective view of the image sensor and the image sensor driving module in Fig. 21 omitting a part of a fixed member, Fig. 32 is an exploded view of the image sensor and the image sensor driving module in Fig. 21 and an enlarged view of region EL3, and Fig. 33 is another exploded view of the image sensor and the image sensor driving module in Fig. 21.

In this embodiment, a photographing module 1b includes a lens assembly 11b, a reflection element 12b, an image sensor 13b, a lens element driving module 14b, a reflection element driving module 15b and an image sensor driving module 16b.

The lens assembly 11b includes at least one lens element. The reflection element 12b is a reflection mirror and located on an object side of the lens assembly 11b, and the reflection element 12b has a reflection surface 120b configured to redirect an incident light traveling along an incident optical axis IOA towards the lens assembly 11b. The image sensor 13b is disposed on an image surface of the lens assembly 11b, and the image sensor 13b is configured to receive light coming from the lens assembly 11b. As shown in Fig. 21, light traveling along the incident optical axis IOA hits the reflection surface 120b and is reflected by the reflection surface 120b, and the light reflected by the reflection surface 120b changes direction and travels into the lens assembly 11b and passes through the at least one lens element to thereby reach the image sensor 13b.

The lens element driving module 14b includes an upper cover 140b, a fixed base 141b, a lens element holding member 142b, a plurality of rollable connection members 143b, a flexible printed circuit board 144b and an axial voice coil motor 145b.

The upper cover 140b is disposed on the fixed base 141b and together form an accommodation space. The lens element holding member 142b is disposed in the accommodation space, and the lens assembly 11b is disposed on the lens element holding member 142b. The rollable connection members 143b are located between and in physical contact with the fixed base 141b and the lens element holding member 142b, so that the lens element holding member 142b is movable relative to the fixed base 141b. In this embodiment, the rollable connection members 143b are, for example, balls.

The flexible printed circuit board 144b is attached to the fixed base 141b.

The axial voice coil motor 145b includes two axial motor coils 1451b and two axial motor magnets 1452b. The axial motor coils 1451b are disposed on the flexible printed circuit board 144b, and the axial motor magnets 1452b are disposed on the lens element holding member 142b. Each of the axial motor coil 1451b and the axial motor magnet 1452b corresponding to each other has an axial motor corresponsive surface, and the axial motor corresponsive surfaces of the corresponding axial motor coil 1451b and axial motor magnet 1452b face each other. The lens element driving module 14b is configured to drive the lens assembly 11b to move in a direction D1 parallel to a lens optical axis LOA of the lens assembly 11b (as shown in Fig. 21 and Fig. 22) by applying a force generated by an electromagnetic interaction between the axial motor coils 1451b and the axial motor magnets 1452b of the axial voice coil motor 145b.

As shown in Fig. 25 to Fig. 28, the reflection element driving module 15b includes a carrier 150b, a holder 151b, a rotating connection part 153b, a curved recess structure 154b, a flexible printed circuit board 155b, a first lateral voice coil motor 156b and two elastic elements 152b.

The reflection element 12b is disposed on the carrier 150b, and the holder 151b and the carrier 150b are disposed corresponding to each other. Furthermore, the carrier 150b is movable relative to the holder 151b.

In detail, the rotating connection part 153b and the curved recess structure 154b are located between the holder 151b and the carrier 150b, the rotating connection part 153b is a cylinder and disposed on the holder 151b, and the curved recess structure 154b is disposed on the carrier 150b. The rotating connection part 153b is in physical contact with the curved recess structure 154b, and the curved recess structure 154b is rotatable relative to the rotating connection part 153b, so that the carrier 150b is movable relative to the holder 151b. As shown in Fig. 29, when a curvature radius of the curved recess structure 154b is Rc, and a curvature radius of the rotating connection part 153b is Rb, the following conditions are satisfied: Rc = 0.5 mm; Rb = 0.5 mm; and Rb/Rc = 1.0.

The flexible printed circuit board 155b is disposed on the holder 151b.

The first lateral voice coil motor 156b includes two first lateral motor coils 1561b and two first lateral motor magnets 1562b, the first lateral motor coils 1561b are disposed on the flexible printed circuit board 155b, and the first lateral motor magnets 1562b are disposed on the carrier 150b. The reflection element driving module 15b is configured to drive the carrier 150b to rotate in a rotation direction D2 around a first axis AL1 (as shown in Fig. 22, Fig. 25 and Fig. 29) by applying a force generated by an electromagnetic interaction between the first lateral motor coils 1561b and the first lateral motor magnets 1562b of the first lateral voice coil motor 156b. The first axis AL1 passes through the rotating connection part 153b, and the first axis AL1 is orthogonal to the incident optical axis IOA and orthogonal to the lens optical axis LOA.

The elastic elements 152b are connected to the holder 151b and the carrier 150b, and the elastic elements 152b exert a preload force on the carrier 150b in a direction towards the holder 151b, so that the carrier 150b can remain stable when the carrier 150b is not driven.

As shown in Fig. 30 to Fig. 33, the image sensor driving module 16b includes a fixed member 161b, a movable plate 162b, a plurality of rollable elements 163b, a flexible printed circuit board 164b and a second lateral voice coil motor 165b.

The fixed member 161b includes a top cover 1611b and a base portion 1612b, and the top cover 1611b is disposed on the base portion 1612b and together form a storage space to accommodate the movable plate 162b.

The rollable elements 163b are balls, and the rollable elements 163b are located between and in physical contact with the fixed member 161b and the movable plate 162b. In specific, each of the top cover 1611b, the base portion 1612b and the movable plate 162b has a plurality of guiding grooves GD for the rollable elements 163b to be movably disposed therein, and the rollable elements 163b can be guided by the guiding grooves GD to move in a predetermined direction. As shown in Fig. 32, each of the two guiding grooves GD of the base portion 1612b is in an arc shape, so that the rollable elements 163b guided by the guiding grooves GD are movable in a non-linear path. Therefore, the movable plate 162b has a degree of freedom and is movable relative to the fixed member 161b. The degree of freedom is defined by a first dynamic axis MAL1, and the first dynamic axis MAL1 is orthogonal to the lens optical axis LOA. In this embodiment, the degree of freedom of the movable plate 162b is rotation around the first dynamic axis MAL1, and the first dynamic axis MAL1 is parallel to the incident optical axis IOA.

In this embodiment, the movable plate 162b has one degree of freedom as an example, but the present disclosure is not limited thereto. In this and other embodiments, the movable plate may further have another degree of freedom (i.e., the movable plate may have two degrees of freedom), where said another degree of freedom is defined by a second dynamic axis, and the first dynamic axis, the second dynamic axis and the lens optical axis are orthogonal to one another. In addition, said another degree of freedom may be linear motion along the second dynamic axis or may be rotation around the second dynamic axis.

The image sensor 13b is disposed on the flexible printed circuit board 164b, the flexible printed circuit board 164b is connected to the movable plate 162b and the fixed member 161b, and the flexible printed circuit board 164b is movable along with the movable plate 162b relative to the fixed member 161b, so that the image sensor 13b is also movable relative to the fixed member 161b. That is, the image sensor 13b is disposed on the movable plate 162b via the flexible printed circuit board 164b and movable along with the movable plate 162b. In this embodiment, the flexible printed circuit board 164b includes an elastic adjustment structure 1640b, and the elastic adjustment structure 1640b is a plurality of through holes.

The second lateral voice coil motor 165b includes two second lateral motor coils 1651b and two second lateral motor magnets 1652b. The second lateral motor coils 1651b are disposed on the flexible printed circuit board 164b, and the second lateral motor magnets 1652b are disposed on the base portion 1612b of the fixed member 161b. Each of the second lateral motor coil 1651b and the second lateral motor magnet 1652b corresponding to each other has a second lateral motor corresponsive surface, and the second lateral motor corresponsive surfaces of the corresponding second lateral motor coil 1651b and second lateral motor magnet 1652b face each other. The image sensor driving module 16b is configured to drive the movable plate 162b to rotation in a rotation direction D4 around the first dynamic axis MAL1 (as shown in Fig. 22 and Fig. 31) by applying a force generated by an electromagnetic interaction between the second lateral motor coils 1651b and the second lateral motor magnets 1652b of the second lateral voice coil motor 165b, so that the image sensor 13b disposed on the flexible printed circuit board 164b can be moved in direction(s) based on the first dynamic axis MAL1. In this embodiment, the axial motor corresponsive surfaces and the second lateral motor corresponsive surfaces are parallel to the incident optical axis IOA.

In this embodiment, the photographing module 1b includes the reflection element driving module 15b and the image sensor driving module 16b, and two-axis image stabilization can be provided by the reflection element driving module 15b and the image sensor driving module 16b. Therefore, the two driving modules 15b and 16b each provides one-axis image stabilization, so that the thickness of the photographing module 1b can be reduced, and the control difficulty of the driving modules 15b and 16b can be reduced.

### 3rd Embodiment (this embodiment is not part of the present invention)

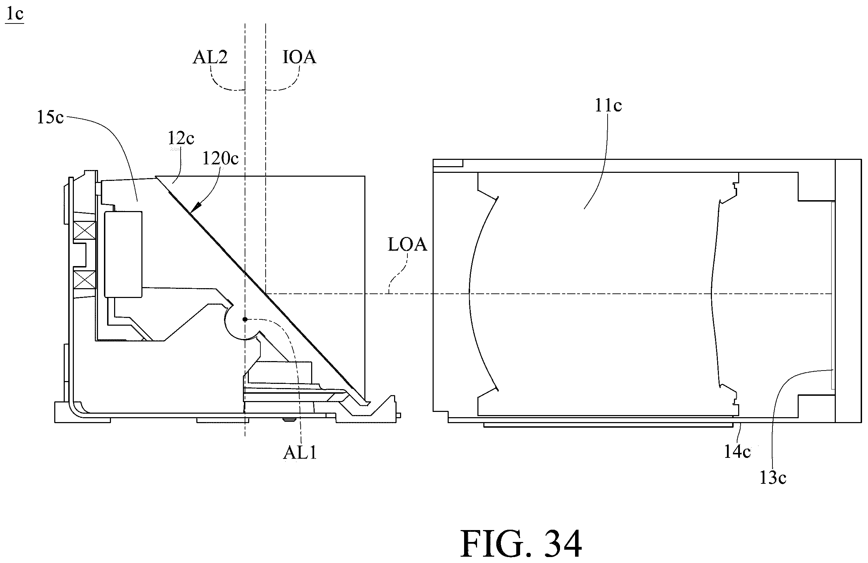

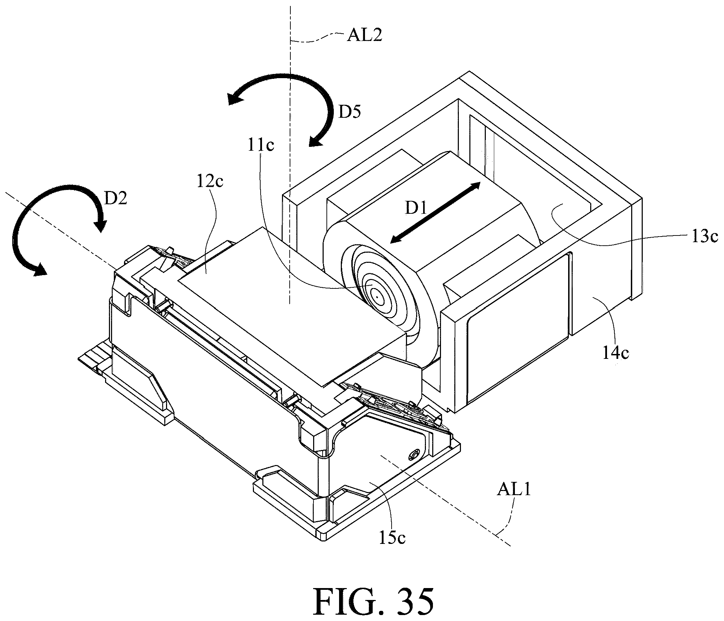

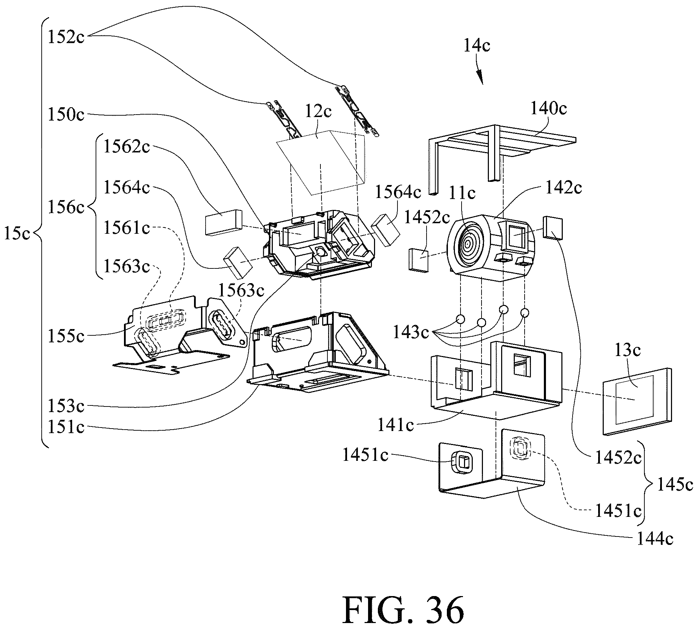

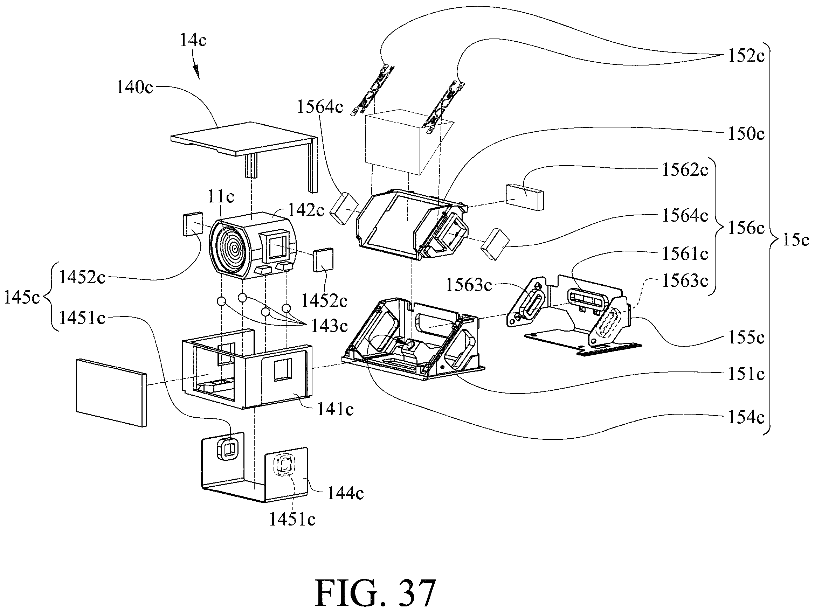

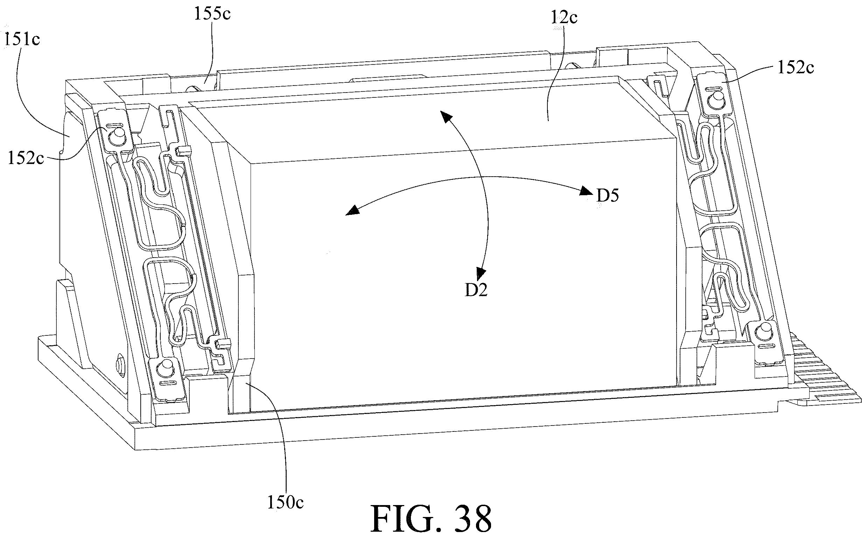

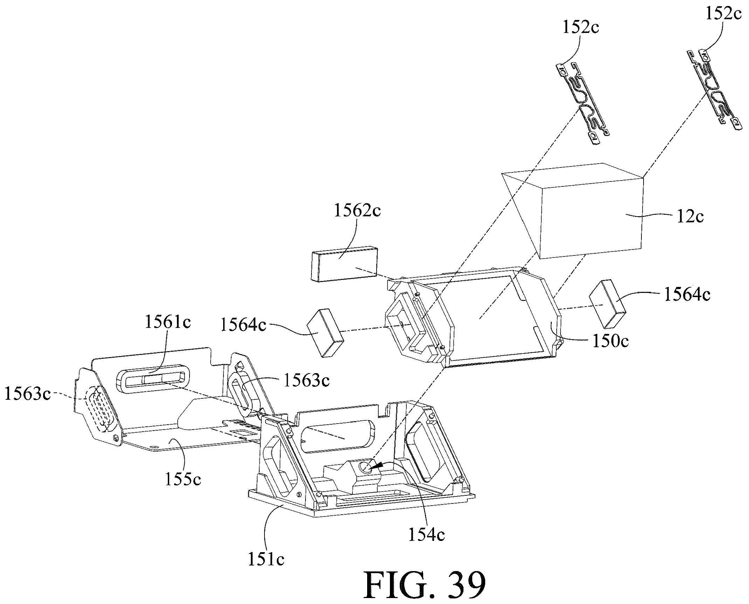

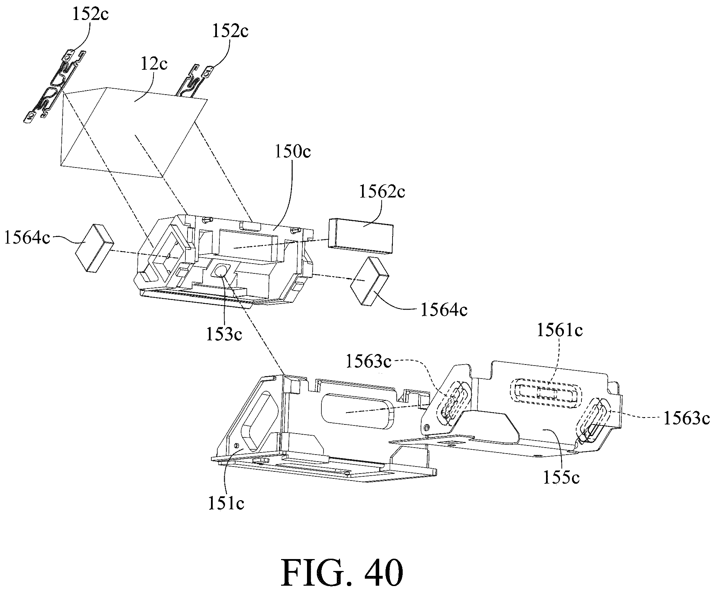

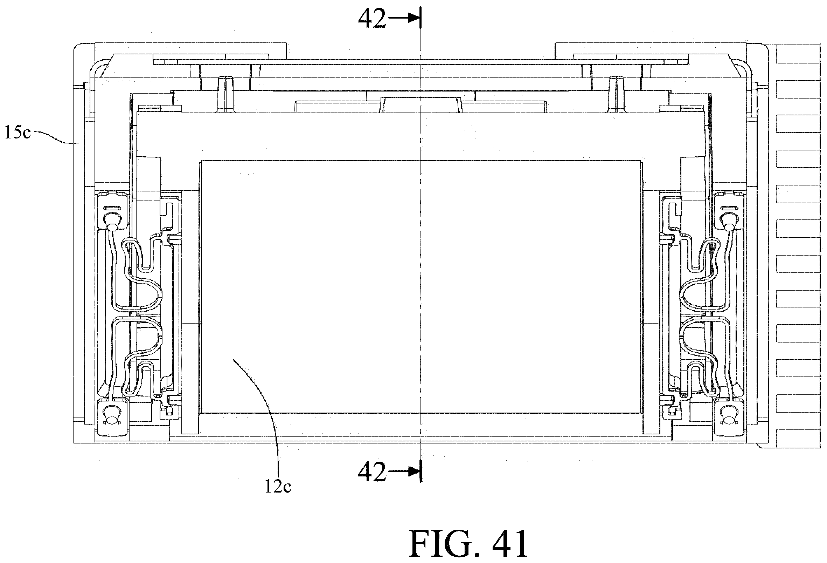

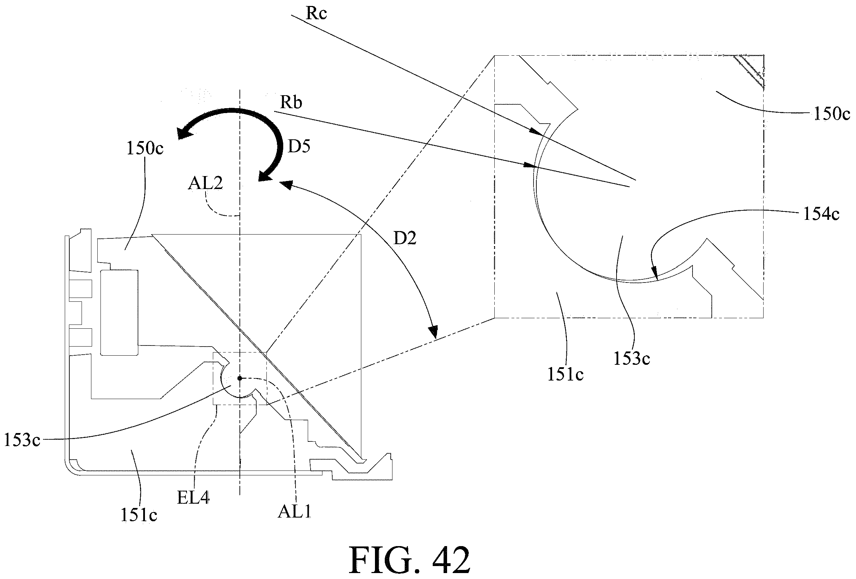

Fig. 34 is a cross-sectional view of a photographing module according to the 3rd embodiment of the present disclosure, Fig. 35 is a schematic view of driving directions of driving modules of the photographing module in Fig. 34, Fig. 36 is an exploded view of the photographing module in Fig. 34, Fig. 37 is another exploded view of the photographing module in Fig. 34, Fig. 38 is a perspective view of a reflection element and a reflection element driving module in Fig. 34, Fig. 39 is an exploded view of the reflection element and the reflection element driving module in Fig. 34, Fig. 40 is another exploded view of the reflection element and the reflection element driving module in Fig. 34, Fig. 41 is a top view of the reflection element and the reflection element driving module in Fig. 34, and Fig. 42 is a cross-sectional view of the reflection element and the reflection element driving module along line 42-42 in Fig. 41 and an enlarged view of region EL4.

In this embodiment, a photographing module 1c includes a lens assembly 11c, a reflection element 12c, an image sensor 13c, a lens element driving module 14c and a reflection element driving module 15c.

The lens assembly 11c includes at least one lens element. The reflection element 12c is a prism and located on an object side of the lens assembly 11c, and the reflection element 12c has a reflection surface 120c configured to redirect an incident light traveling along an incident optical axis IOA towards the lens assembly 11c. The image sensor 13c is disposed on an image surface of the lens assembly 11c, and the image sensor 13c is configured to receive light coming from the lens assembly 11c. As shown in Fig. 34, light traveling along the incident optical axis IOA hits the reflection surface 120c and is reflected by the reflection surface 120c, and the light reflected by the reflection surface 120c changes direction and travels into the lens assembly 11c and passes through the at least one lens element to thereby reach the image sensor 13c.

The lens element driving module 14c includes an upper cover 140c, a fixed base 141c, a lens element holding member 142c, a plurality of rollable connection members 143c, a flexible printed circuit board 144c and an axial voice coil motor 145c.

The upper cover 140c is disposed on the fixed base 141c and together form an accommodation space. The lens element holding member 142c is disposed in the accommodation space, and the lens assembly 11c is disposed on the lens element holding member 142c. The rollable connection members 143c are located between and in physical contact with the fixed base 141c and the lens element holding member 142c, so that the lens element holding member 142c is movable relative to the fixed base 141c. In this embodiment, the rollable connection members 143c are, for example, balls.

The flexible printed circuit board 144c is attached to the fixed base 141c.

The axial voice coil motor 145c includes two axial motor coils 1451c and two axial motor magnets 1452c. The axial motor coils 1451c are disposed on the flexible printed circuit board 144c, and the axial motor magnets 1452c are disposed on the lens element holding member 142c. Each of the axial motor coil 1451c and the axial motor magnet 1452c corresponding to each other has an axial motor corresponsive surface, and the axial motor corresponsive surfaces of the corresponding axial motor coil 1451c and axial motor magnet 1452c face each other. The lens element driving module 14c is configured to drive the lens assembly 11c to move in a direction D1 parallel to a lens optical axis LOA of the lens assembly 11c (as shown in Fig. 34 and Fig. 35) by applying a force generated by an electromagnetic interaction between the axial motor coils 1451c and the axial motor magnets 1452c of the axial voice coil motor 145c.

As shown in Fig. 38 to Fig. 41, the reflection element driving module 15c includes a carrier 150c, a holder 151c, a rotating connection part 153c, a curved recess structure 154c, a flexible printed circuit board 155c, a first lateral voice coil motor 156c and two elastic elements 152c.

The reflection element 12c is disposed on the carrier 150c, and the holder 151c and the carrier 150c are disposed corresponding to each other. Furthermore, the carrier 150c is movable relative to the holder 151c.

In detail, the rotating connection part 153c and the curved recess structure 154c are located between the holder 151c and the carrier 150c. The rotating connection part 153c is a spherical protrusion, and the rotating connection part 153c and the carrier 150c are one-piece formed. The curved recess structure 154c is disposed on the holder 151c. The rotating connection part 153c is in physical contact with the curved recess structure 154c, and the curved recess structure 154c is rotatable relative to the rotating connection part 153c, so that the carrier 150c is movable relative to the holder 151c. As shown in Fig. 42, when a curvature radius of the curved recess structure 154c is Rc, and a curvature radius of the rotating connection part 153c is Rb, the following conditions are satisfied: Rc = 0.55 mm; Rb = 0.5 mm; and Rb/Rc = 0.91.

The flexible printed circuit board 155c is disposed on the holder 151c.

The first lateral voice coil motor 156c includes a pitching lateral motor coil 1561c, a pitching lateral motor magnet 1562c, two yawing lateral motor coils 1563c and two yawing lateral motor magnets 1564c. The pitching lateral motor coil 1561c and the yawing lateral motor coils 1563c are disposed on the flexible printed circuit board 155c, and the pitching lateral motor magnet 1562c and the yawing lateral motor magnets 1564c are disposed on the carrier 150c. The carrier 150c can be driven to rotate in a rotation direction D2 around a first axis AL1 (as shown in Fig. 35, Fig. 38 and Fig. 42) by a force generated by an electromagnetic interaction between the pitching lateral motor coil 1561c and the pitching lateral motor magnet 1562c of the first lateral voice coil motor 156c, and the carrier 150c can also be driven to rotate in a rotation direction D5 around a second axis AL2 (as shown in Fig. 35, Fig. 38 and Fig. 42) by a force generated by an electromagnetic interaction between the yawing lateral motor coils 1563c and the yawing lateral motor magnets 1564c of the first lateral voice coil motor 156c. The first axis AL1 and the second axis AL2 pass through the rotating connection part 153c, the first axis AL1 is orthogonal to the incident optical axis IOA and orthogonal to the lens optical axis LOA, and the second axis AL2 is parallel to the incident optical axis IOA.

Each of the pitching lateral motor coil 1561c and the pitching lateral motor magnet 1562c has a pitching lateral motor corresponsive surface, and the two pitching lateral motor corresponsive surfaces face each other. Each of the yawing lateral motor coil 1563c and the yawing lateral motor magnet 1564c corresponding to each other has a yawing lateral motor corresponsive surface, and the yawing lateral motor corresponsive surfaces of the corresponding yawing lateral motor coil 1563c and yawing lateral motor magnet 1564c face each other. In this embodiment, the axial motor corresponsive surfaces, the pitching lateral motor corresponsive surfaces and the yawing lateral motor corresponsive surfaces are parallel to the incident optical axis IOA.

The elastic elements 152c are connected to the holder 151c and the carrier 150c, and the elastic elements 152c exert a preload force on the carrier 150c in a direction towards the holder 151c, so that the carrier 150c can remain stable when the carrier 150c is not driven.

In this embodiment, the photographing module 1c includes the reflection element driving module 15c but not include an image sensor driving module, and two-axis image stabilization can be provided by the reflection element driving module 15c, so that the thickness of the photographing module 1c can be reduced.

### 4th Embodiment (this embodiment is not part of the present invention)

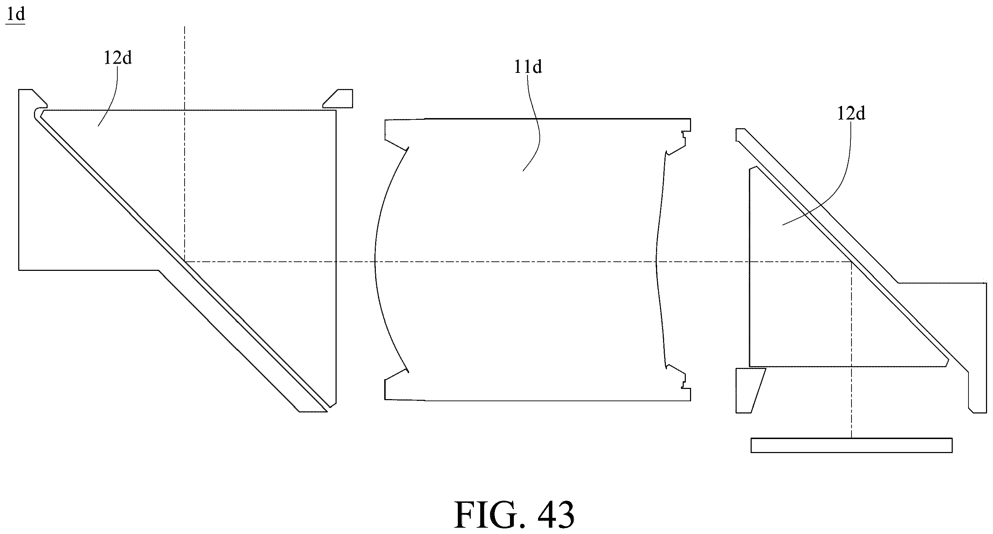

Please refer to Fig. 43, which is a cross-sectional view of a photographing module according to the 4th embodiment of the present disclosure.

In this embodiment, a photographing module 1d is provided. The photographing module 1d has a configuration similar to that of the photographing module 1 as disclosed in the 1st embodiment, and they are different from each other in that in this embodiment, the photographing module 1d includes two reflection elements 12d, and the reflection elements 12d are prisms and respectively disposed on an object side and an image side of the assembly 11d, so that light changes direction multiple times in the photographing module 1d so as to be applicable to various optical systems of different requirements.

The present disclosure is not limited to the numbers of reflection element in the embodiments as described above. In other examples, a photographing module may include more than two reflection elements.

### 5th Embodiment (this embodiment is not part of the present invention)

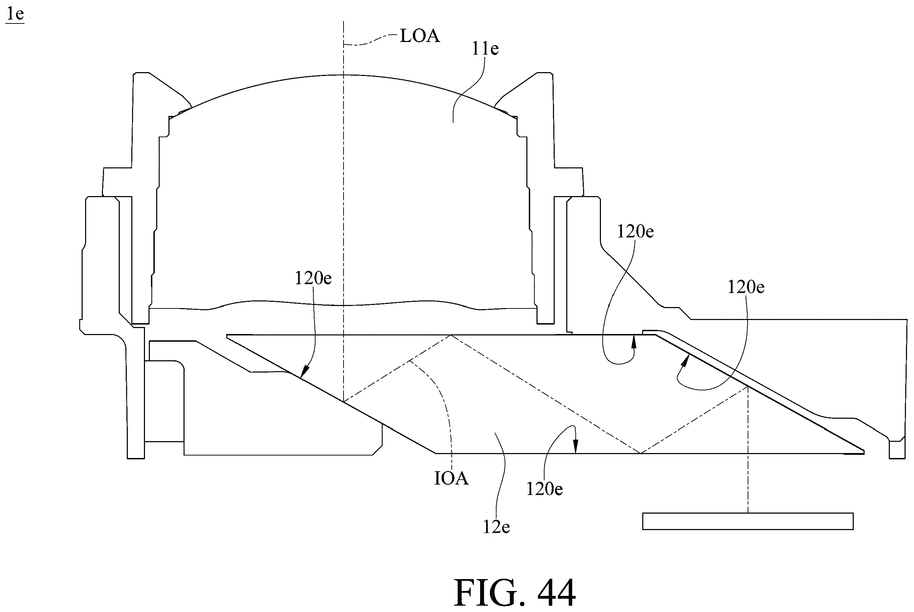

Please refer to Fig. 44, which is a cross-sectional view of a photographing module according to the 5th embodiment of the present disclosure.

In this embodiment, a photographing module 1e is provided. The photographing module 1e has a configuration similar to that of the photographing module 1 as disclosed in the 1st embodiment, and they are different from each other in that in this embodiment, a reflection element 12e of the photographing module 1e is disposed on an image side of the lens assembly 11e, so that light traveling along a lens optical axis LOA of the lens assembly 11e and passing through the lens element(s) enters the reflection element 12e, hits and is reflected by a reflection surface 120e, and then changes direction to travel along an incident optical axis IOA. Moreover, in this embodiment, the reflection element 12e has several reflection surfaces 120e, so that light changes direction multiple times in the reflection element 12e, and thus, the photographing module 1e is applicable to various optical systems of different requirements.

According to the present disclosure, a single reflection element may have one or more reflection surfaces, and the present disclosure is not limited thereto.

### 6th Embodiment

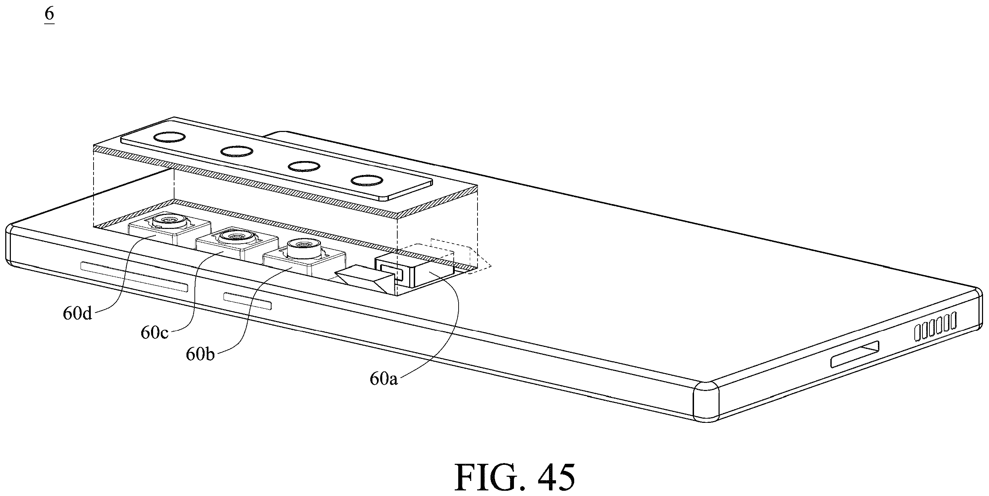

Please refer to Fig. 45, which is an exploded view of an electronic device according to the 6th embodiment of the present disclosure.

In this embodiment, an electronic device 6 is a smartphone including an image capturing unit 60a, an image capturing unit 60b, an image capturing unit 60c, an image capturing unit 60d, a flash module, an image signal processor, a display module and an image software processor (not shown). The image capturing unit 60a, the image capturing unit 60b, the image capturing unit 60c and the image capturing unit 60d are disposed on the same side of the electronic device 6, and the display module is disposed on the opposite side of the electronic device 6. The image capturing unit 60a is the photographing module 1b as disclosed in the 2nd embodiment.

The image capturing unit 60a is an ultra-long-focus telephoto camera, the image capturing unit 60b is a long-focus telephoto camera, the image capturing unit 60c is a wide-angle main camera, and the image capturing unit 60d is an ultra-wide-angle camera. The maximum field of view of the image capturing unit 60a ranges, for example, between 5 degrees and 30 degrees, the maximum field of view of the image capturing unit 60b ranges, for example, between 30 degrees and 60 degrees, the maximum field of view of the image capturing unit 60c ranges, for example, between 65 degrees and 90 degrees, and the maximum field of view of the image capturing unit 60d ranges, for example, between 93 degrees and 175 degrees. In this embodiment, the image capturing unit 60a, the image capturing unit 60b, the image capturing unit 60c and the image capturing unit 60d have different fields of view, such that the electronic device 6 can have various magnification ratios so as to meet the requirement of optical zoom functionality. In addition, the image capturing unit 60a is an ultra-long-focus telephoto camera having a light-folding element configuration, such that it is favorable for the miniaturization of the electronic device 6. In this embodiment, the electronic device 6 includes multiple image capturing units 60a, 60b, 60c and 60d, but the present disclosure is not limited to the number and arrangement of image capturing unit. When a user captures images of an object, the light rays converge in the image capturing unit 60a, the image capturing unit 60b, the image capturing unit 60c or the image capturing unit 60d to generate an image(s), and the flash module is activated for light supplement. The focus assist module detects the object distance of the imaged object to achieve fast auto focusing. The image signal processor is configured to optimize the captured image to improve image quality and provided zooming function. The light beam emitted from the focus assist module can be either conventional infrared or laser. The display module can be a touch screen or a physical button. The user is able to interact with the display module and the image software processor having multiple functions to capture images and complete image processing. The image processed by the image software processor can be displayed on the display module.

Note that the camera cover plate being separated from the main body of the device shown in Fig. 45 is only for the convenience of showing the camera modules inside the electronic device 6, which does not necessary indicate that the camera cover plate is detachable from the main body, and the present disclosure is not limited thereto.

### 7th Embodiment

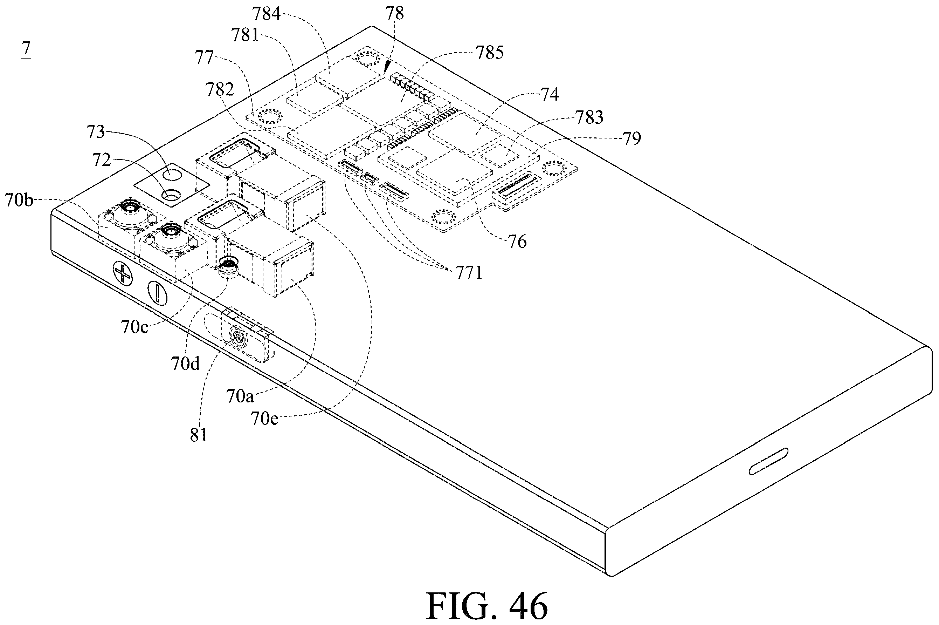

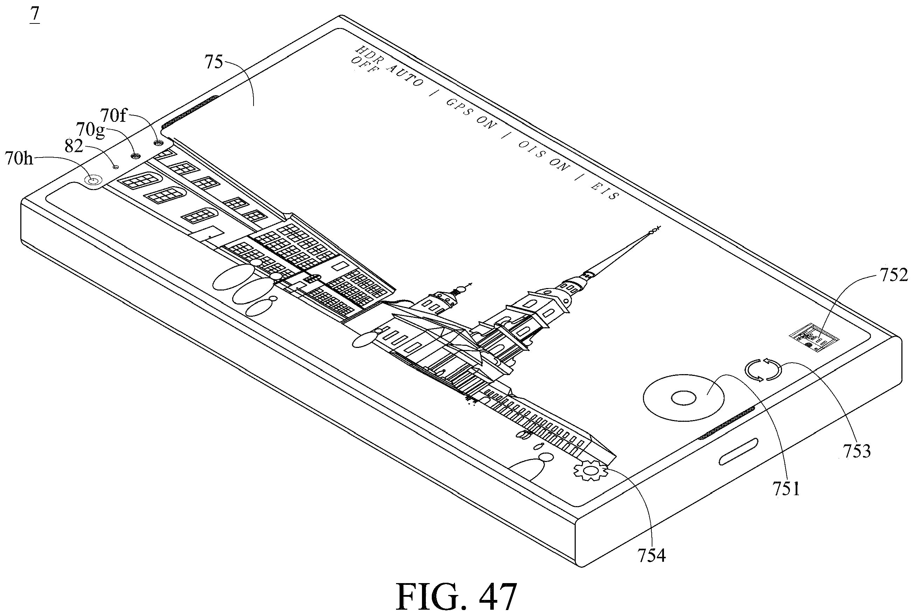

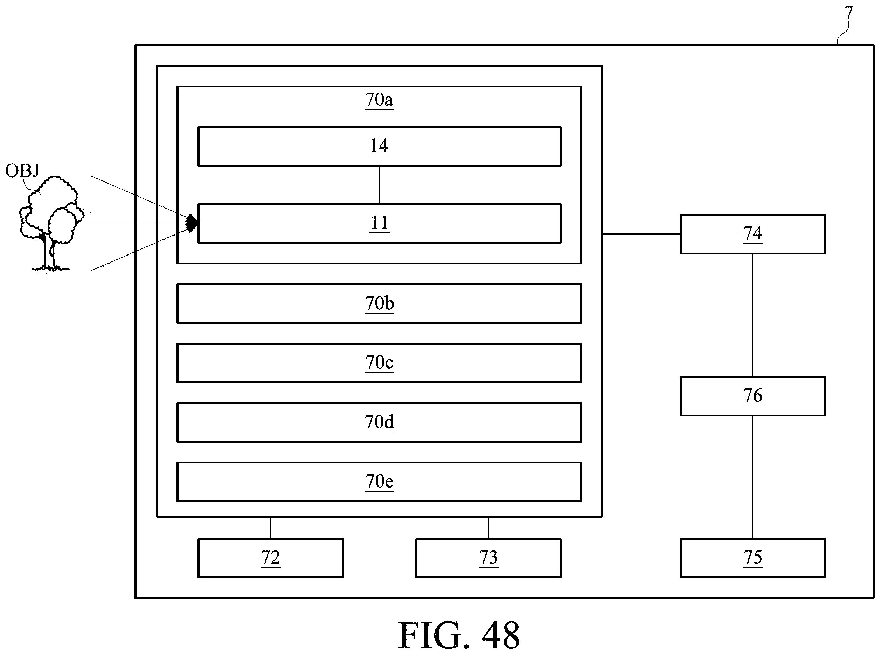

Please refer to Fig. 46 to Fig. 48. Fig. 46 is one perspective view of an electronic device according to the 7th embodiment of the present disclosure, Fig. 47 is another perspective view of the electronic device in Fig. 46, and Fig. 48 is a block diagram of the electronic device in Fig. 46.

In this embodiment, an electronic device 7 is a mobile device such as a computer, a smartphone, a smart wearable device, a camera drone, a driving recorder and displayer, and the present disclosure is not limited thereto. The electronic device 7 includes an image capturing unit 70a, an image capturing unit 70b, an image capturing unit 70c, an image capturing unit 70d, an image capturing unit 70e, an image capturing unit 70f, an image capturing unit 70g, an image capturing unit 70h, a flash module 72, a focus assist module 73, an image signal processor 74, a display module 75, an image software processor 76 and a biometric identification device 81. In addition, the image capturing unit 70a is the photographing module 1 as disclosed in the 1st embodiment and the image capturing unit 70e is the photographing module 1b as disclosed in the 2nd embodiment.

The image capturing unit 70a, the image capturing unit 70b, the image capturing unit 70c, the image capturing unit 70d and the image capturing unit 70e are disposed on the same side of the electronic device 7. The image capturing unit 70f, the image capturing unit 70g, the image capturing unit 70h and the display module 75 are disposed on the opposite side of the electronic device 7. The display module 75 can be a user interface, such that the image capturing unit 70f and the image capturing unit 70g can be front-facing cameras of the electronic device 7 for taking selfies, but the present disclosure is not limited thereto.

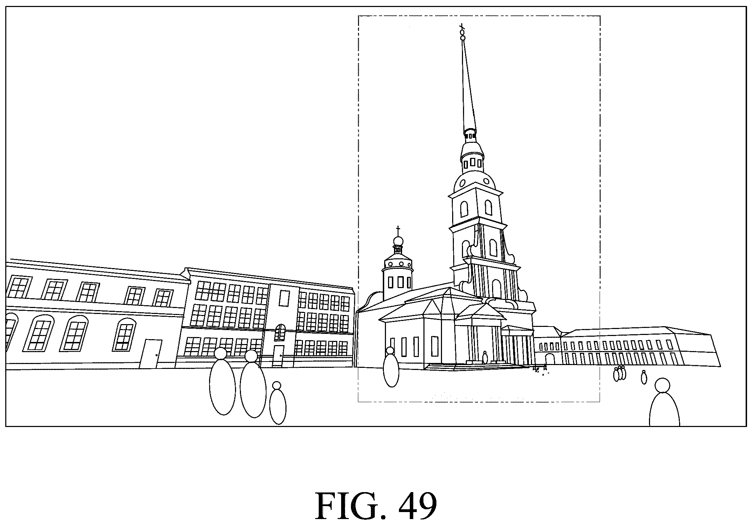

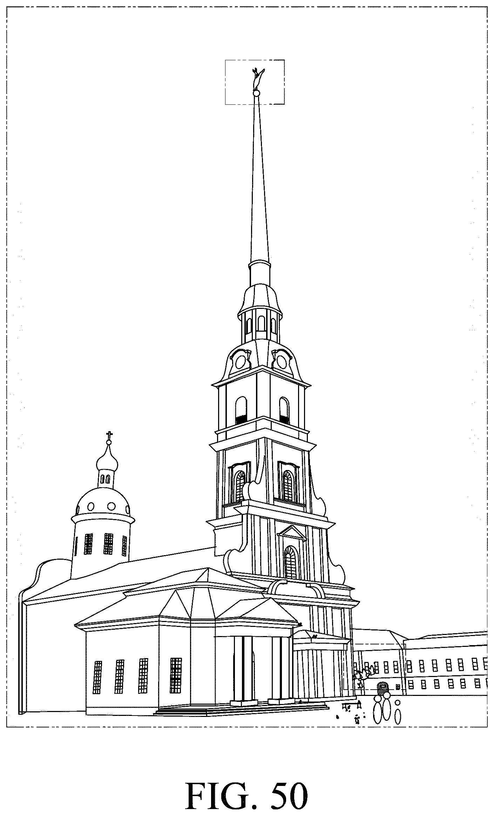

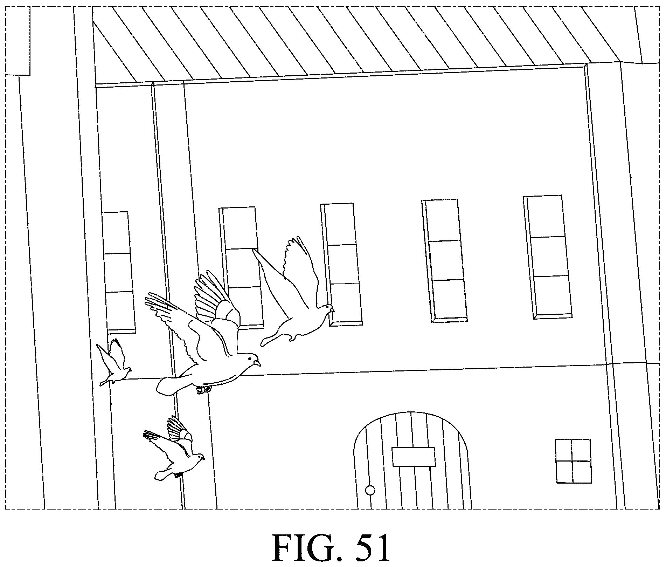

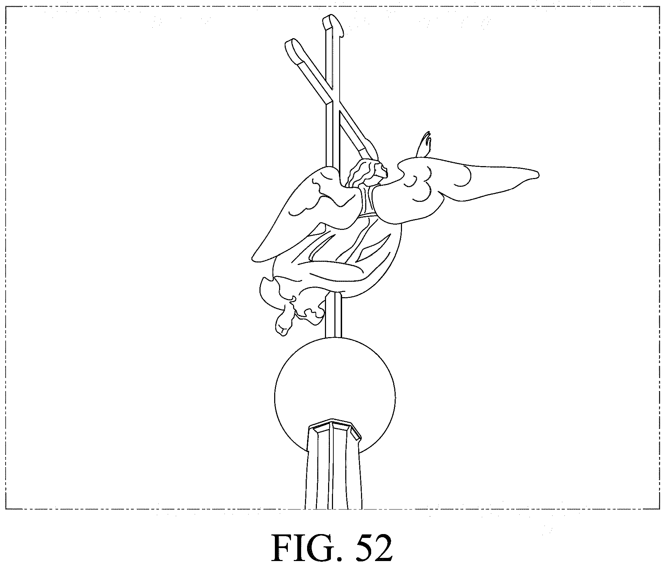

In this embodiment, the image capturing unit 70a is an ultra-long-focus telephoto camera, the image capturing unit 70b is a wide-angle image capturing unit, the image capturing unit 70c is an ultra-wide-angle image capturing unit, the image capturing unit 70d is a macro-photo image capturing unit, the image capturing unit 70e is a zoom-telephoto image capturing unit, the image capturing unit 70f is a ultra-wide-angle image capturing unit, the image capturing unit 70g is a wide-angle image capturing unit, and the image capturing unit 70h is a ToF (time of flight) image capturing unit. In this embodiment, the image capturing unit 70a, the image capturing unit 70b, the image capturing unit 70c, the image capturing unit 70d and the image capturing unit 70e have different fields of view, such that the electronic device 7 can have various magnification ratios so as to meet the requirement of optical zoom functionality. For example, the ultra-wide-angle image capturing unit 70c or 70f with the maximum field of view ranging between 105 degrees and 125 degrees can achieve an image with an equivalent focal length between 11 mm and 14 mm. In this case, the image captured by the ultra-wide-angle image capturing unit 70c or 70f can refer to Fig. 49, which shows an image captured by the electronic device 7 with an equivalent focal length ranging between 11 mm and 14 mm, and the captured image as shown in Fig. 49 includes the whole cathedral, surrounding buildings and people on the square. The captured image as shown in Fig. 49 has a relatively large field of view and depth of view, but it often has a relatively large degree of distortion. The wide-angle image capturing unit 70b or 70g with the maximum field of view ranging between 70 degrees and 90 degrees can achieve an image with an equivalent focal length between 22 mm and 30 mm. In this case, the image captured by the wide-angle image capturing unit 70b or 70g can refer to Fig. 50, which shows an image captured by the electronic device 7 with an equivalent focal length ranging between 22 mm and 30 mm, and the captured image as shown in Fig. 50 includes the whole cathedral and people in front of the cathedral. The zoom-telephoto image capturing unit 70e with the maximum field of view ranging between 10 degrees and 40 degrees can achieve an image with an equivalent focal length between 60 mm and 300 mm, and the zoom-telephoto image capturing unit 70e can be regarded as able to provide 5X magnification. In this case, the image captured by the zoom-telephoto image capturing unit 70e can refer to Fig. 51, which shows an image captured by the electronic device 7 with an equivalent focal length ranging between 60 mm and 300 mm, and the captured image as shown in Fig. 51 includes the birds flying in front of the cathedral. The captured image as shown in Fig. 51 has a relatively small field of view and depth of view, and the zoom-telephoto image capturing unit 70e can be used for shooting moving targets. For this, the axial voice coil motor of the lens element driving module can drive the lens element holding member and thus move the lens assembly to quickly and continuously autofocus on the target, such that the captured image of the target would not be blurred due to long focusing distance. When imaging, the zoom-telephoto image capturing unit 70e can further perform optical zoom for imaged objects so as to obtain more clear images. Said magnification ratio of one image capturing unit is defined as a ratio of the maximum focal length to the minimum focal length of the image capturing unit. For instance, the magnification ratio of the zoom-telephoto image capturing unit 70e is 5X magnification. The ultra-long-focus telephoto camera 70a with the maximum field of view ranging between 4 degrees and 8 degrees can achieve an image with an equivalent focal length between 400 mm and 600 mm. In this case, the image captured by the ultra-long-focus telephoto camera 70a can refer to Fig. 52, which shows an image captured by the electronic device 7 with an equivalent focal length ranging between 400 mm and 600 mm, and the captured image as shown in Fig. 52 includes the angel-and-cross-topped spire of the cathedral. The captured image as shown in Fig. 52 has a smaller field of view and depth of view, and the lens assembly 11 of the image captured by the ultra-long-focus telephoto camera 70a may be easier to capture an out of focus image due to slight camera shake. For this, the lens element driving module 14 can provide a feedback force to correct the shake so as to achieve optical image stabilization while providing a force to drive the lens assembly 11 of the ultra-long-focus telephoto camera 70a to focus on a target. In addition, the image capturing unit 70h can determine depth information of the imaged object. In this embodiment, the electronic device 7 includes multiple image capturing units 70a, 70b, 70c, 70d, 70e, 70f, 70g, and 70h, but the present disclosure is not limited to the number and arrangement of image capturing units. The equivalent focal lengths to which the abovementioned image capturing units correspond are estimated values based on particular conversion functions, and the estimated values may be different from actual focal lengths of the image capturing units due to designs of the lens assemblies and sizes of the image sensors.

When a user captures images of an object OBJ, light rays converge in the image capturing unit 70a, the image capturing unit 70b, the image capturing unit 70c, the image capturing unit 70d or the image capturing unit 70e to generate images, and the flash module 72 is activated for light supplement. The focus assist module 73 detects the object distance of the imaged object OBJ to achieve fast auto focusing. The image signal processor 74 is configured to optimize the captured image to improve image quality. The light beam emitted from the focus assist module 73 can be either conventional infrared or laser.

In addition, the light rays may converge in the image capturing unit 70f, 70g or 70h to generate images. The electronic device 7 can include a reminder light 82 that can be illuminated to remind the user that the image capturing unit 70f, 70g or 70h of the electronic device 7 is working. The display module 75 can be a touch screen or a physical button 751. The user is able to interact with the display module 75 and the image software processor 76 having multiple functions to capture images and complete image processing. The image processed by the image software processor 76 can be displayed on the display module 75. The user can replay the previously captured image through an image playback button 752 of the display module 75, can choose a suitable image capturing unit for shooting through an image capturing units switching button 753 of the display module 75, and can properly adjust shooting parameters according to current shooting situations through an integrated menu button 754 of the display module 75.

Further, the electronic device 7 further includes a circuit board 77 and a plurality of electronic components 78 disposed on the circuit board 77. The image capturing units 70a, 70b, 70c, 70d, 70e, 70f, 70g, and 70h are electrically connected to the electronic components 78 via connectors 771 on the circuit board 77. The electronic components 78 can include a signal emitting module 781 and can transmit image(s) to other electronic device or a cloud storage via the signal emitting module 781. The signal emitting module 781 can be a wireless fidelity (WiFi) module, a Bluetooth module, an infrared module, a network service module or an integrated module for transmitting various signals mentioned above, and the present disclosure is not limited thereto.

The electronic components 78 can also include a storage unit 782, a random access memory 783 for storing image information, a gyroscope 784, and a position locator 785 for facilitating the navigation or positioning of the electronic device 7. In this embodiment, the image signal processor 74, the image software processor 76 and the random access memory 783 are integrated into a single chip system 79, but the present disclosure is not limited thereto. In some other embodiments, the electronic components can also be integrated in the image capturing unit or can also be disposed on one of the circuit boards. In addition, the user can use the biometric identification device 81 to turn on and unlock the electronic device 7.

The smartphone in this embodiment is only exemplary for showing the photographing module of the present disclosure installed in an electronic device, and the present disclosure is not limited thereto. The photographing module can be optionally applied to optical systems with a movable focus. Furthermore, the photographing module features good capability in aberration corrections and high image quality, and can be applied to 3D (three-dimensional) image capturing applications, in products such as digital cameras, mobile devices, digital tablets, smart televisions, network surveillance devices, dashboard cameras, vehicle backup cameras, multi-camera devices, image recognition systems, motion sensing input devices, wearable devices and other electronic imaging devices.

The foregoing description, for the purpose of explanation, has been described with reference to specific embodiments. It is to be noted that the present disclosure shows different data of the different embodiments; however, the data of the different embodiments are obtained from experiments. The embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the present disclosure to the precise forms disclosed. Many modifications and variations are possible in view of the above teachings.

## Claims

1. A photographing module (1b) comprising:
a lens assembly (11b) comprising at least one lens element;
a reflection element (12b) located on an object side of the lens assembly (11b), wherein the reflection element (12b) has a reflection surface (120b), and the reflection surface (120b) is configured to redirect an incident light traveling along an incident optical axis (IOA) towards the lens assembly (11b);
an image sensor (13b) disposed on an image surface of the lens assembly (11b), wherein the image sensor (13b) is configured to receive light coming from the lens assembly (11b);
a lens element driving module (14b) comprising an axial voice coil motor (145b), wherein the lens element driving module (14b) drives the lens assembly (11b) to move along a lens optical axis (LOA) of the lens assembly (11b) by the axial voice coil motor (145b);
a reflection element driving module (15b) comprising:
a carrier (150b), wherein the reflection element (12b) is disposed on the carrier (150b);
a holder (151b) disposed corresponding to the carrier (150b), wherein the carrier (150b) is movable relative to the holder (151b);
a rotating connection part (153b) located between the holder (151b) and the carrier (150b), wherein the rotating connection part (153b) is disposed on one of the holder (151b) and the carrier (150b);
a curved recess structure (154b) located between the holder (151b) and the carrier (150b), wherein the curved recess structure (154b) is disposed on another one of the holder (151b) and the carrier (150b), the rotating connection part (153b) is in physical contact with the curved recess structure (154b), and the curved recess structure (154b) is rotatable relative to the rotating connection part (153b); and
a first lateral voice coil motor (156b) configured to drive the carrier (150b) to rotate around a first axis (AL1), wherein the first axis (AL1) passes through the rotating connection part (153b); and
an image sensor driving module (16b) comprising:
a fixed member (161b);
a movable plate (162b), wherein the image sensor (13b) is disposed on the movable plate (162b), the movable plate (162b) has a degree of freedom and is movable relative to the fixed member (161b), the degree of freedom is defined by a first dynamic axis (MAL1), and the first dynamic axis (MAL1) is orthogonal to the lens optical axis (LOA);
a plurality of rollable elements (163b) located between and in physical contact with the fixed member (161b) and the movable plate (162b); and
a second lateral voice coil motor (165b) configured to drive the movable plate (162b) to move so that the image sensor (13b) can be moved in directions based on the first dynamic axis (MAL1);
wherein the first dynamic axis (MAL1) is parallel to the incident optical axis (IOA), and the image sensor driving module (16b) is configured to drive the movable plate (162b) to rotate in a rotation direction (D4) around the first dynamic axis (MAL1).

2. The photographing module (1b) of claim 1, wherein the axial voice coil motor (145b) comprises an axial motor coil (1451b) and an axial motor magnet (1452b), each of the axial motor coil (1451b) and the axial motor magnet (1452b) has an axial motor corresponsive surface (CS1), the two axial motor corresponsive surfaces (CS1) face each other, the second lateral voice coil motor (165b) of the image sensor driving module (16b) comprises a second lateral motor coil (1651b) and a second lateral motor magnet (1652b), each of the second lateral motor coil (1651b) and the second lateral motor magnet (1652b) has a second lateral motor corresponsive surface (CS2), and the two second lateral motor corresponsive surfaces (CS2) face each other;
wherein the axial motor corresponsive surfaces (CS1) and the second lateral motor corresponsive surfaces (CS2) are parallel to the incident optical axis (IOA).

3. The photographing module (1b) of claim 1, wherein the first axis (AL1) is orthogonal to the incident optical axis (IOA), and the first axis (AL1) is orthogonal to the lens optical axis (LOA).

4. The photographing module (1b) of claim 1, wherein a curvature radius of the curved recess structure (154b) is Rc, a curvature radius of the rotating connection part (153b) is Rb, and the following condition is satisfied: $0.7 \leq Rb / Rc \leq 1 .$

5. The photographing module (1) of claim 1, wherein the image sensor driving module (16) further comprises a flexible printed circuit board (164), the flexible printed circuit board (164) is connected to the movable plate (162) and the fixed member (161), and the flexible printed circuit board (164) generates a force acting on the movable plate (162) after the movable plate (162) is driven to move.

6. The photographing module (1) of claim 5, wherein the flexible printed circuit board (164) comprises an elastic adjustment structure (1640).

7. The photographing module (1b) of claim 2, wherein the lens element driving module (14b) further comprises:
a fixed base (141b);
a lens element holding member (142b), wherein the lens assembly (11b) is disposed on the lens element holding member (142b), and the lens element holding member (142b) is movable relative to the fixed base (141b); and
a plurality of rollable connection members (143b) located between and in physical contact with the fixed base (141b) and the lens element holding member (142b).

8. The photographing module (1b) of claim 7, wherein the axial motor magnet (1452b) is disposed on the lens element holding member (142b).

9. The photographing module (1b) of claim 3, wherein the reflection element driving module (15b) further comprises an elastic element (152b), the elastic element (152b) is connected to the holder (151b) and the carrier (150b), the elastic element (152b) exerts a preload force on the carrier (150b), and a direction of the preload force is towards the holder (151b).

10. The photographing module (1d or 1e) of claim 1, wherein the reflection element (12e) further has another reflection surface (120e), or the photographing module (1d) further comprises another reflection element (12d) located on the object side or an image side of the lens assembly (11d), so that light changes directions at least twice in the photographing module (1d or 1e).

11. The photographing module (1b) of claim 1, wherein the movable plate (162b) of the image sensor driving module (16b) further has another degree of freedom, the another degree of freedom is defined by a second dynamic axis, and the first dynamic axis (MAL1), the second dynamic axis and the lens optical axis (LOA) are orthogonal to one another.

12. An electronic device (7) comprising: the photographing module (1b) of claim 1.

## Patentansprüche

1. Fotografiermodul (1b), das aufweist:
eine Linsenbaugruppe (11b), die mindestens ein Linsenelement aufweist;
ein Reflexionselement (12b), das auf der Objektseite der Linsenbaugruppe (11b) angeordnet ist, wobei das Reflexionselement (12b) eine Reflexionsfläche (120b) aufweist, und die Reflexionsfläche (120b) so ausgebildet ist, dass sie ein entlang einer optischen Einfallsachse (IOA) in Richtung der Linsenbaugruppe (11b) verlaufendes einfallendes Licht umlenkt;
einen Bildsensor (13b), der auf einer Bildfläche der Linsenbaugruppe (11b) angeordnet ist, wobei der Bildsensor (13b) so ausgebildet ist, dass er von der Linsenbaugruppe (11b) kommendes Licht empfängt;
ein Linsenelement-Ansteuerungsmodul (14b), das einen axialen Schwingspulenmotor (145b) aufweist, wobei das Linsenelement-Ansteuerungsmodul (14b) die Linsenbaugruppe (11b) so ansteuert, dass sie sich durch den axialen Schwingspulenmotor (145b) entlang einer optischen Linsenachse (LOA) der Linsenbaugruppe (11b) bewegt;
ein Reflexionselement-Ansteuerungsmodul (15b), das aufweist:
einen Träger (150b), wobei das Reflexionselement (12b) auf dem Träger (150b) angeordnet ist;
eine Halterung (151b), die entsprechend dem Träger (150b) angeordnet ist,
wobei der Träger (150b) relativ zur Halterung (151b) bewegbar ist;
ein drehendes Verbindungsteil (153b), das sich zwischen der Halterung (151b) und dem Träger (150b) befindet, wobei das drehende Verbindungsteil (153b) entweder an der Halterung (151b) oder dem Träger (150b) angeordnet ist;
eine gekrümmte Aussparungsstruktur (154b), die sich zwischen der Halterung (151b) und dem Träger (150b) befindet, wobei die gekrümmte Aussparungsstruktur (154b) an dem jeweils anderen aus der Halterung (151b) und dem Träger (150b) angeordnet ist, das drehende Verbindungsteil (153b) in physischem Kontakt mit der gekrümmten Aussparungsstruktur (154b) steht, und die gekrümmte Aussparungsstruktur (154b) relativ zum drehenden Verbindungsteil (153b) drehbar ist; und
ein erster lateraler Schwingspulenmotor (156b), der so ausgebildet ist, dass er den Träger (150b) zu einer Drehung um eine erste Achse (AL1) ansteuert, wobei die erste Achse (AL1) durch das drehende Verbindungsteil (153b) verläuft; und
ein Bildsensor-Ansteuerungsmodul (16b), das aufweist:
ein feststehendes Teil (161b);
eine bewegbare Platte (162b), wobei der Bildsensor (13b) auf der bewegbaren Platte (162b) angeordnet ist, die bewegbare Platte (162b) einen Freiheitsgrad aufweist und relativ zum feststehenden Teil (161b) bewegbar ist, der Freiheitsgrad durch eine erste dynamische Achse (MAL1) definiert ist, und die erste dynamische Achse (MAL1) orthogonal zur optischen Linsenachse (LOA) verläuft;
eine Vielzahl von rollbaren Elementen (163b), die sich zwischen dem feststehenden Teil (161b) und der bewegbaren Platte (162b) befinden und mit diesen in physischem Kontakt stehen; und
ein zweiter lateraler Schwingspulenmotor (165b), der so ausgebildet ist, dass er die bewegbare Platte (162b) zur Bewegung ansteuert, sodass der Bildsensor (13b) in Richtungen bewegt werden kann, die auf der ersten dynamischen Achse (MAL1) basieren;
wobei die erste dynamische Achse (MAL1) parallel zur optischen Einfallsachse (IOA) verläuft und das Bildsensor-Ansteuerungsmodul (16b) so ausgebildet ist, dass es die bewegbare Platte (162b) so ansteuert, dass sie sich in einer Drehrichtung (D4) um die erste dynamische Achse (MAL1) dreht.

2. Fotografiermodul (1b) nach Anspruch 1, wobei der axiale Schwingspulenmotor (145b) eine axiale Motorspule (1451b) und einen axialen Motormagneten (1452b) aufweist, wobei die axiale Motorspule (1451b) und der axiale Motormagnet (1452b) jeweils eine axiale motorbezogene Fläche (CS1) aufweisen, wobei die beiden axialen motorbezogenen Flächen (CS1) einander zugewandt sind, wobei der zweite laterale Schwingspulenmotor (165b) des Bildsensor-Ansteuerungsmoduls (16b) eine zweite laterale Motorspule (1651b) und einen zweiten lateralen Motormagneten (1652b) aufweist, wobei die zweite laterale Motorspule (1651b) und der zweite laterale Motormagnet (1652b) jeweils eine zweite laterale motorbezogene Fläche (CS2) aufweisen, und wobei die beiden zweiten lateralen motorbezogenen Flächen (CS2) einander zugewandt sind;
wobei die axialen motorbezogenen Flächen (CS1) und die zweiten lateralen motorbezogenen Flächen (CS2) parallel zur optischen Einfallsachse (IOA) verlaufen.

3. Fotografiermodul (1b) nach Anspruch 1, wobei die erste Achse (AL1) orthogonal zur optischen Einfallsachse (IOA) ist und die erste Achse (AL1) orthogonal zur optischen Linsenachse (LOA) ist.

4. Fotografiermodul (1b) nach Anspruch 1, wobei ein Krümmungsradius der gekrümmten Aussparungsstruktur (154b) Rc ist, ein Krümmungsradius des drehenden Verbindungsteils (153b) Rb ist, und die folgende Bedingung erfüllt ist:$0,7 \leq Rb / Rc \leq 1 .$

5. Fotografiermodul (1) nach Anspruch 1, wobei das Bildsensor-Ansteuerungsmodul (16) ferner eine flexible Leiterplatte (164) aufweist, wobei die flexible Leiterplatte (164) mit der bewegbaren Platte (162) und dem feststehenden Teil (161) verbunden ist, und die flexible Leiterplatte (164) eine auf die bewegbare Platte (162) wirkende Kraft erzeugt, nachdem die bewegbare Platte (162) zu einer Bewegung angesteuert wurde.

6. Fotografiermodul (1) nach Anspruch 5, wobei die flexible Leiterplatte (164) eine elastische Verstellstruktur (1640) aufweist.

7. Fotografiermodul (1b) nach Anspruch 2, wobei das Linsenelement-Ansteuerungsmodul (14b) ferner aufweist:
eine feststehende Basis (141b);
ein Linsenelement-Halteteil (142b), wobei die Linsenbaugruppe (11b) auf dem Linsenelement-Halteteil (142b) angeordnet ist und das Linsenelement-Halteteil (142b) relativ zur feststehenden Basis (141b) bewegbar ist; und
eine Vielzahl von rollbaren Verbindungselementen (143b), die sich zwischen der feststehenden Basis (141b) und dem Linsenelement-Halteteil (142b) befinden und mit diesen in physischem Kontakt stehen.

8. Fotografiermodul (1b) nach Anspruch 7, wobei der axiale Motormagnet (1452b) an dem Linsenelement-Halteteil (142b) angeordnet ist.

9. Fotografiermodul (1b) nach Anspruch 3, wobei das Reflexionselement-Ansteuerungsmodul (15b) ferner ein elastisches Element (152b) aufweist, wobei das elastische Element (152b) mit der Halterung (151b) und dem Träger (150b) verbunden ist, das elastische Element (152b) eine Vorspannkraft auf den Träger (150b) ausübt und eine Richtung der Vorspannkraft zur Halterung (151b) hin gerichtet ist.

10. Fotografiermodul (1d oder 1e) nach Anspruch 1, wobei das Reflexionselement (12e) ferner eine weitere Reflexionsfläche (120e) aufweist, oder das Fotografiermodul (1d) ferner ein weiteres Reflexionselement (12d) aufweist, das sich auf der Objektseite oder der Bildseite der Linsenbaugruppe (11d) befindet, sodass das Licht im Fotografiermodul (1d oder 1e) mindestens zweimal die Richtung ändert.

11. Fotografiermodul (1b) nach Anspruch 1, wobei die bewegbare Platte (162b) des Bildsensor-Ansteuerungsmoduls (16b) ferner einen weiteren Freiheitsgrad aufweist, wobei der weitere Freiheitsgrad durch eine zweite dynamische Achse definiert ist und die erste dynamische Achse (MAL1), die zweite dynamische Achse und die optische Linsenachse (LOA) zueinander orthogonal sind.

12. Elektronische Vorrichtung (7), die aufweist:
das Fotografiermodul (1b) nach Anspruch 1.

## Revendications

1. Module de photographie (1b) comprenant :
un ensemble de lentilles (11b) comprenant au moins un élément de lentille ;
un élément réfléchissant (12b) situé sur un côté objet de l'ensemble de lentilles (11b), dans lequel l'élément réfléchissant (12b) présente une surface de réflexion (120b), et la surface de réflexion (120b) est configurée pour rediriger une lumière incidente se déplaçant le long d'un axe optique incident (IOA) vers l'ensemble de lentilles (11b) ;
un capteur d'image (13b) disposé sur une surface image de l'ensemble optique (11b), dans lequel le capteur d'image (13b) est configuré pour recevoir la lumière provenant de l'ensemble de lentilles (11b) ;
un module de commande d'élément de lentille (14b) comprenant un moteur à bobine mobile axial (145b), dans lequel le module de commande d'élément de lentille (14b) commande l'ensemble de lentilles (11b) pour se déplacer le long d'un axe optique de lentille (LOA) de l'ensemble de lentilles (11b) par le moteur à bobine mobile axial (145b) ;
un module de commande d'élément réfléchissant (15b) comprenant :
un porteur (150b), dans lequel l'élément réfléchissant (12b) est disposé sur le porteur (150b) ;
un support (151b) disposé de manière correspondante au porteur (150b), dans lequel le porteur (150b) est mobile par rapport au support (151b) ;
une pièce de connexion rotative (153b) située entre le support (151b) et le porteur (150b), dans lequel la pièce de connexion rotative (153b) est disposée sur l'un du support (151b) et du porteur (150b) ;
une structure d'évidement incurvée (154b) située entre le support (151b) et le porteur (150b), dans lequel la structure d'évidement incurvée (154b) est disposée sur l'autre du support (151b) et du porteur (150b), la partie de connexion rotative (153b) est en contact physique avec la structure d'évidement incurvée (154b), et la structure d'évidement incurvée (154b) est rotative par rapport à la partie de connexion rotative (153b) ; et
un premier moteur à bobine mobile latéral (156b) configuré pour commander le porteur (150b) pour tourner autour d'un premier axe (AL1), dans lequel le premier axe (AL1) passe par la partie de connexion rotative (153b) ; et
un module de commande de capteur d'image (16b) comprenant :
un organe fixe (161b) ;
une plaque mobile (162b), dans lequel le capteur d'image (13b) est disposé sur la plaque mobile (162b), la plaque mobile (162b) présente un degré de liberté et est mobile par rapport à l'organe fixe (161b), le degré de liberté est défini par un premier axe dynamique (MAL1), et le premier axe dynamique (MAL1) est orthogonal à l'axe optique de lentille (LOA) ;
une pluralité d'éléments roulants (163b) situés entre et en contact physique avec l'organe fixe (161b) et la plaque mobile (162b) ; et
un second moteur à bobine mobile latéral (165b) configuré pour commander la plaque mobile (162b) pour se déplacer de manière à ce que le capteur d'image (13b) puisse être déplacé dans des directions basées sur le premier axe dynamique (MAL1) ;
dans lequel le premier axe dynamique (MAL1) est parallèle à l'axe optique incident (IOA), et le module de commande de capteur d'image (16b) est configuré pour commander la plaque mobile (162b) pour tourner dans une direction de rotation (D4) autour du premier axe dynamique (MAL1).

2. Module de photographie (1b) selon la revendication 1, dans lequel le moteur à bobine mobile axial (145b) comprend une bobine de moteur axial (1451b) et un aimant de moteur axial (1452b), chacun de la bobine de moteur axial (1451b) et de l'aimant de moteur axial (1452b) présente une surface correspondante de moteur axial (CS1), les deux surfaces correspondantes de moteur axial (CS1) sont face à face, le second moteur à bobine mobile latéral (165b) du module de commande de capteur d'image (16b) comprend une seconde bobine de moteur latéral (1651b) et un second aimant de moteur latéral (1652b), chacun de la seconde bobine de moteur latéral (1651b) et du second aimant de moteur latéral (1652b) présente une seconde surface correspondante de moteur latéral (CS2), et les deux secondes surfaces correspondantes de moteur latéral (CS2) sont face à face ;
dans lequel les surfaces correspondantes de moteur axial (CS1) et les secondes surfaces correspondantes de moteur latéral (CS2) sont parallèles à l'axe optique incident (IOA).

3. Module de photographie (1b) selon la revendication 1, dans lequel le premier axe (AL1) est orthogonal à l'axe optique incident (IOA), et le premier axe (AL1) est orthogonal à l'axe optique de lentille (LOA).

4. Module de photographie (1b) selon la revendication 1, dans lequel un rayon de courbure de la structure d'évidement incurvée (154b) est Rc, un rayon de courbure de la partie de connexion rotative (153b) est Rb, et la condition suivante est satisfaite :$0,7 \leq Rb / Rc \leq 1 .$

5. Module de photographie (1) selon la revendication 1, dans lequel le module de commande de capteur d'image (16) comprend en outre une carte de circuit imprimé flexible (164), la carte de circuit imprimé flexible (164) est connectée à la plaque mobile (162) et à l'organe fixe (161), et la carte de circuit imprimé flexible (164) génère une force agissant sur la plaque mobile (162) après que la plaque mobile (162) est commandée pour se déplacer.

6. Module photographique (1) selon la revendication 5, dans lequel la carte de circuit imprimé flexible (164) comprend une structure d'ajustement élastique (1640).

7. Module de photographie (1b) selon la revendication 2, dans lequel le module de commande d'élément de lentille (14b) comprend en outre :
une base fixe (141b) ;
un organe de maintien d'élément de lentille (142b), dans lequel l'ensemble de lentilles (11b) est disposé sur l'organe de maintien d'élément de lentille (142b), et l'organe de maintien d'élément de lentille (142b) est mobile par rapport à la base fixe (141b) ; et
une pluralité d'organes de connexion roulants (143b) situés entre et en contact physique avec la base fixe (141b) et l'organe de maintien d'élément de lentille (142b).

8. Module de photographie (1b) selon la revendication 7, dans lequel l'aimant de moteur axial (1452b) est disposé sur l'organe de support d'élément de lentille (142b).

9. Module de photographie (1b) selon la revendication 3, dans lequel le module de commande d'élément réfléchissant (15b) comprend en outre un élément élastique (152b), l'élément élastique (152b) est connecté au support (151b) et au porteur (150b), l'élément élastique (152b) exerce une force de précharge sur le porteur (150b), et une direction de la force de précharge est vers le support (151b).

10. Module de photographie (1d ou 1e) selon la revendication 1, dans lequel l'élément réfléchissant (12e) présente en outre une autre surface réfléchissante (120e), ou le module de photographie (1d) comprend en outre un autre élément réfléchissant (12d) situé du côté objet ou du côté image de l'ensemble de lentilles (11d), de sorte que la lumière change de direction au moins deux fois dans le module de photographie (1d ou 1e).

11. Module de photographie (1b) selon la revendication 1, dans lequel la plaque mobile (162b) du module de commande de capteur d'image (16b) présente en outre un autre degré de liberté, l'autre degré de liberté est défini par un second axe dynamique, et le premier axe dynamique (MAL1), le second axe dynamique et l'axe optique de lentille (LOA) sont orthogonaux les uns aux autres.

12. Dispositif électronique (7) comprenant :
le module de photographie (1b) selon la revendication 1.
